# EUROPEAN PATENT APPLICATION

(11) **EP 4 447 305 A1**
(43) Date of publication of application: **16.10.2024**
(21) Application number: 22904321.1
(22) Date of filing: 09.12.2022
(51) Int. Cl.: H02M 7/06, H02J 50/20

(54) **RECTIFIER CIRCUIT AND POWER GENERATION DEVICE**

(30) Priority: 10.12.2021 JP 2021200623
(71) Applicant: Sony Semiconductor Solutions Corporation, Atsugi-shi, Kanagawa 243-0014 (JP)
(72) Inventor: YOSHINO, Yoshitaka, Atsugi-shi, Kanagawa 243-0014 (JP)
(74) Representative: D Young & Co LLP
(86) International application number: PCT/JP2022/045431
(87) International publication number: WO 2023/106394

(57) **Abstract**

A rectifier circuit for increasing an output voltage is realized.

Provided is a rectifier circuit including: a first line including a first series circuit in which two or more switching elements are connected in series; a second line including a second series circuit in which three or more switching elements are connected in series, the second series circuit being connected in parallel with the first series circuit; one or more first antenna elements connected between the switching elements of the first series circuit; and one or more second antenna elements connected between the switching elements of the second series circuit, in which an output is extracted from a parallel connection point between the first series circuit and the second series circuit.

## Description

### TECHNICAL FIELD

The present technology relates to a rectifier circuit connected to an antenna device having an energy harvesting function, and a power generator including the antenna device and the rectifier circuit.

### BACKGROUND ART

Converting energy of a radio wave such as a broadcast wave and the like present around us into power (energy harvesting) has been considered. In a case of environmental power generation, a current flowing to a circuit through the antenna is rectified into a direct current and converted into electric energy. A diode is used to rectify a radio wave into a direct current. A rectifier circuit-equipped antenna is called a rectenna.

Non-Patent Document 1 describes that a high impedance antenna is used to receive a band of 470 MHz to 600 MHz of digital terrestrial broadcasting, and an excitation voltage of a rectifier is increased to improve efficiency of a rectenna.

Non-Patent Document 2 describes measurement results of power flux densities of V-High multimedia broadcasting (208.5 MHz to 222 MHz), digital terrestrial broadcasting (470 MHz to 710 MHz), and an 800 MHz band mobile phone base station (860 MHz to 890 MHz), and evaluation of an antenna for electromagnetic wave collection.

### CITATION LIST

### NON-PATENT DOCUMENT

Non-Patent Document 1: "Design of a High-Impedance Wideband Folded Dipole Antenna and Reception Power Level for Energy Harvesting Applications", Hiroshi Miyagoshi, Keisuke Noguchi, Kenji Ito, Jiro Ida, Technical Report of the Institute of Electronics, Information and Communication Engineers Vol. 114, No. 245, pp. 13 to 18 Non-Patent Document 2: "[Invited Talk] Energy Harvesting from Broadcasting and Cellular Radio Sources", Shoichi Kitazawa, Hirokazu Kamoda, Hiroshi Ban, Naoya Kukutsu, Kiyoshi Kobayashi, Technical Report of the Institute of Electronics, Information and Communication Engineers WPT 2013-26 (2013-11)

### SUMMARY OF THE INVENTION

### PROBLEMS TO BE SOLVED BY THE INVENTION

In both of Non-Patent Document 1 and Non-Patent Document 2 described above, only electromagnetic energy of a radio wave propagating in the air is targeted, an antenna is designed in accordance with a frequency, and a matching unit for matching impedance is provided. Such a configuration has a problem that reception can be performed only at a matched frequency, and the obtained power is significantly reduced. In particular, an antenna is separately required in accordance with a frequency to be received, and in order to receive a broadcast wave, a size of about 1/2 of a wavelength is required, and reception efficiency is lowered with a reduced size, so the application range is significantly limited. That is, in order to receive a wide frequency, a plurality of antennas having a size corresponding to a frequency capable of being received is required, and the antennas need to be separately installed.

The inventors of the present application has proposed an antenna device capable of obtaining larger reception power by taking in electric field energy of a quasi-electrostatic field (near field) in addition to a wide range of radio waves with a configuration different from that of the antenna device that uses a reception antenna of the related art and converts energy of radio waves into power. A rectifier circuit capable of further increasing the output of such an antenna device is desired.

An object of the present technology is to provide a rectifier circuit capable of reducing the number of rectifying diodes required and increasing the output, and a power generator including the antenna device and the rectifier circuit.

### SOLUTIONS TO PROBLEMS

According to the present technology, there is provided a rectifier circuit including:
a first line including a first series circuit in which two or more switching elements are connected in series;
a second line including a second series circuit in which three or more switching elements are connected in series, the second series circuit being connected in parallel with the first series circuit;
one or more first antenna elements connected between the switching elements of the first series circuit; and
one or more second antenna elements connected between the switching elements of the second series circuit,
in which an output is extracted from a parallel connection point between the first series circuit and the second series circuit.
Furthermore, the present technology is a power generator in which an antenna and the rectifier circuit are combined.

### BRIEF DESCRIPTION OF DRAWINGS

Fig. 1 is a block diagram of an example of a power generator.
Figs. 2A, 2B, and 2C are a plan view and cross-sectional views of an example of an antenna device included in a power generator.
Figs. 3A and 3B are a plan view and a cross-sectional view of another example of an antenna device included in a power generator.
Fig. 4 is a schematic diagram for describing operation of an antenna device.
Fig. 5 is a schematic diagram for describing a specific example of an antenna device.
Figs. 6A and 6B are schematic diagrams for describing another example of an antenna device. Fig. 7 is a connection diagram illustrating a configuration of an example of a rectifier circuit.
Fig. 8 is a graph for describing characteristics of a diode of a rectifier circuit.
Fig. 9 is a schematic diagram for describing a first example of an antenna device including a device board.
Fig. 10 is a schematic diagram for describing a modification example of the first example.
Fig. 11 is a schematic diagram for describing a second example of an antenna device including a device board.
Fig. 12 is a schematic diagram for describing a modification example of the second example.
Fig. 13 is a schematic diagram for describing a third example of an antenna device including a device board.
Fig. 14 is a connection diagram for describing a modification example of an antenna device.
Fig. 15 is a connection diagram for describing a modification example of an antenna device.
Figs. 16A, 16B, and 16C are schematic diagrams respectively illustrating specific examples of a second antenna element.
Fig. 17 is a schematic diagram used for description of an example of a power generator applied to a metal rack.
Fig. 18 is a schematic diagram used for description of an example of a power generator.
Fig. 19 is a schematic diagram used for description of a modification example of a power generator.
Figs. 20A and 20B are schematic diagrams used for description of a power generator applied to a microwave oven.
Figs. 21A and 21B are schematic diagrams used for description of another example of a power generator applied to a vehicle.
Fig. 22 is an enlarged perspective view illustrating a partial cross section of a tire.
Figs. 23A and 23B are schematic diagrams for describing a specific example of another example of an antenna device.
Fig. 24 is a schematic diagram for describing a specific example of still another example of an antenna device.
Fig. 25 is a schematic diagram illustrating a board of still another example of an antenna device.
Fig. 26 is a block diagram illustrating a general configuration for increasing output.
Fig. 27 is a block diagram of an example of a configuration in which antenna devices are connected in series.
Fig. 28 is a connection diagram illustrating a configuration in which two rectifier circuits are connected in series.
Fig. 29 is a block diagram of another example of a configuration in which two antenna devices are connected in series.
Fig. 30 is a connection diagram illustrating an example of circuit connection of Fig. 29.
Fig. 31 is a block diagram of still another example of a configuration in which three antenna devices are connected in series.
Fig. 32 is a connection diagram illustrating an example of circuit connection of Fig. 31.
Fig. 33 is a connection diagram of a first embodiment of the present technology.
Fig. 34 is a connection diagram of a modification example of the first embodiment of the present technology.
Fig. 35 is a connection diagram illustrating a rectifier circuit of still another example of the antenna device illustrated in Fig. 24.
Fig. 36 is a connection diagram of another modification example of the first embodiment.
Fig. 37 is a connection diagram used for description of the first embodiment.
Fig. 38 is a waveform diagram used for description of the first embodiment.
Fig. 39 is a connection diagram of a second embodiment of the present technology.
Fig. 40 is a connection diagram of a third embodiment of the present technology.
Figs. 41A and 41B are connection diagrams for describing a full-wave rectifier circuit.
Figs. 42A and 42B are timing charts for describing a full-wave rectifier circuit.
Figs. 43A, 43B, 43C, and 43D are waveform diagrams for describing voltages induced in the antenna.
Figs. 44A, 44B, and 44C are connection diagrams for describing a rectifier circuit according to the present technology.
Figs. 45A, 45B, 45C, and 45D are timing charts for describing a rectifier circuit.
Figs. 46A, 46B, and 46C are connection diagrams for describing a rectifier circuit according to the present technology.
Figs. 47A, 47B, and 47C are timing charts for describing a rectifier circuit.
Figs. 48A, 48B, and 48C are timing charts for describing a rectifier circuit.
Figs. 49A, 49B, and 49C are connection diagrams for describing a rectifier circuit according to the present technology.
Figs. 50A, 50B, and 50C are timing charts for describing a rectifier circuit.
Figs. 51A and 51B are timing charts for describing a rectifier circuit.
Figs. 52A, 52B, and 52C are connection diagrams for describing a rectifier circuit according to the present technology.
Figs. 53A, 53B, and 53C are timing charts for describing a rectifier circuit.
Figs. 54A and 54B are timing charts for describing a rectifier circuit.
Fig. 55 is a connection diagram of an example of a rectifier circuit using a MOSFET instead of a diode.
Fig. 56 is a connection diagram of another example of a rectifier circuit using a MOSFET instead of a diode.
Fig. 57 is a schematic diagram illustrating a measurement device for measuring a relationship between output of a harvester and a ground resistance.
Fig. 58 is a schematic diagram illustrating a measurement device for measuring a relationship between output of a harvester and a ground resistance.
Fig. 59 is a graph illustrating a relationship between output of a harvester and a ground resistance.
Fig. 60 is a connection diagram illustrating a circuit example of a high-pass filter structure.
Fig. 61 is a graph illustrating an example of frequency characteristics of the high-pass filter in Fig. 60.
Fig. 62 is a connection diagram illustrating a circuit example for causing a device to be in a floating state from a ground.
Fig. 63 is a graph illustrating an example of frequency characteristics of a parallel resonance circuit of Fig. 62.
Fig. 64 is a connection diagram illustrating a circuit example for causing a device to float from a ground.
Figs. 65A, 65B, and 65C are block diagrams illustrating a plurality of circuit examples.
Fig. 66 is a connection diagram illustrating an example in which two antenna elements are separated by a resistor. Fig. 67 is a connection diagram illustrating an example in which two antenna elements are separated by a filter.
Figs. 68A, 68B, 68C, and 68D are connection diagrams illustrating a plurality of examples of a filter.
Fig. 69 is a schematic diagram illustrating an example in which the present technology is applied to a case of charging a game controller of a game device.
Fig. 70 is a schematic diagram illustrating another example in which the present technology is applied to a case of charging a game controller of a game device.
Fig. 71 is a schematic diagram illustrating another example in which the present technology is applied to a power supply of an unmanned aerial vehicle (hereinafter, referred to as a drone as appropriate).
Fig. 72 is a connection diagram illustrating another example in which the present technology is applied to a charge circuit of a battery.

### MODE FOR CARRYING OUT THE INVENTION

The embodiments to be described below are preferred specific examples of the present technology, and various technically preferable limitations are given. However, the scope of the present technology is not limited to these embodiments unless there is a description to limit the present technology in the following description. Furthermore, in the following description, the same names and reference numerals indicate the same or similar constituent elements, and redundant description will be omitted as appropriate.

An antenna device to which the present technology is applied will be described below. Electric field energy is induced in a metal portion (iron, aluminum, copper, metal alloy, or the like) of an industrial product, a vehicle, a vending machine, a refrigerator, a microwave oven, a metal rack, a guardrail, a mail post, a traffic light, or the like existing in the vicinity. By using such an industrial product metal portion as an antenna, a radio wave in the space and electric field energy of a quasi-electrostatic field (near field) can be received. That is, when metal is present in a floating state in the space, various AC power (AC current) flows on a metal surface. Therefore, this metal is regarded as an antenna, and this power can be efficiently converted into energy. Note that the industrial product metal portion is a metal portion other than an industrial product designed as an antenna.

In an input terminal portion that is in contact with or connected to the industrial product metal portion and is for using the industrial product metal portion itself as an antenna, the impedance for reception is preferably high in connection with the rectifier circuit in a subsequent stage. In particular, the input terminal portion is connected in series without providing a matching circuit in accordance with the frequency. The rectifier circuit rectifies an output signal of the antenna with a diode having a very small reverse current with respect to a forward current. Therefore, in addition to the radio wave, it is possible to efficiently receive power of a quasi-electrostatic field (near field) which is not a radio wave having a frequency of 50/60 Hz leaking from a very small power supply.

It is not necessary to consider the antenna shape between the input terminal portion connected to the industrial product metal portion and the rectifier circuit, and the matching circuit is unnecessary. An example of the antenna device is a structure in which the ground of the antenna device is capacitively coupled and grounded to the ground of the earth, or grounded by a cable or the like to generate an electric field. The electric field energy in the quasi-electrostatic field other than the radio wave can also be taken in. Furthermore, another example of the antenna device is a structure in which another antenna element different from the ground of the antenna device is capacitively coupled and grounded to the ground of the earth, or grounded by a cable or the like to generate an electric field. That is, power or noise leaking from a power cord or an inverter can be received and converted into energy. Since a wide range of electric field energy can be received, reception power can be increased. The quasi-electrostatic field is a voltage phenomenon that does not have a property of propagating like a radiated electromagnetic field, a so-called radio wave, and is distributed like electrostatic charge in the vicinity of a person, a vehicle, or a substance. The electrostatic field is regarded to have no time change, and the quasi-electrostatic field has a frequency component and has a time change.

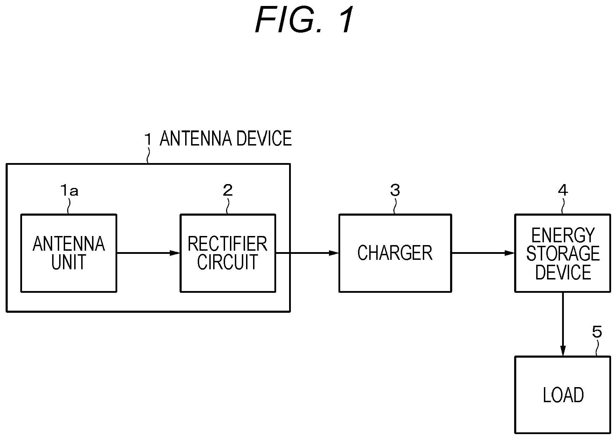

Fig. 1 illustrates a configuration of a power generator having an energy harvesting function according to the present technology. The electric field energy is received by an antenna unit 1a including a first antenna element and a second antenna element, and the output of the antenna unit 1a is supplied to a rectifier circuit 2. The antenna unit 1a and the rectifier circuit 2 constitute an antenna device 1.

The output of the rectifier circuit 2 is supplied to a charger 3. An energy storage device 4 is connected to the charger 3. The energy storage device 4 is charged by the charger 3. The charger 3 may control the discharge of the energy storage device 4. The antenna device 1, the charger 3, and the energy storage device 4 constitute a power generator. A load 5 is connected to the energy storage device 4. The load 5 is operated by the power stored in the energy storage device 4. The load 5 is a microcomputer, a wireless communication unit, a sensor, or the like. The output of the sensor is wirelessly transmitted under the control of the microcomputer.

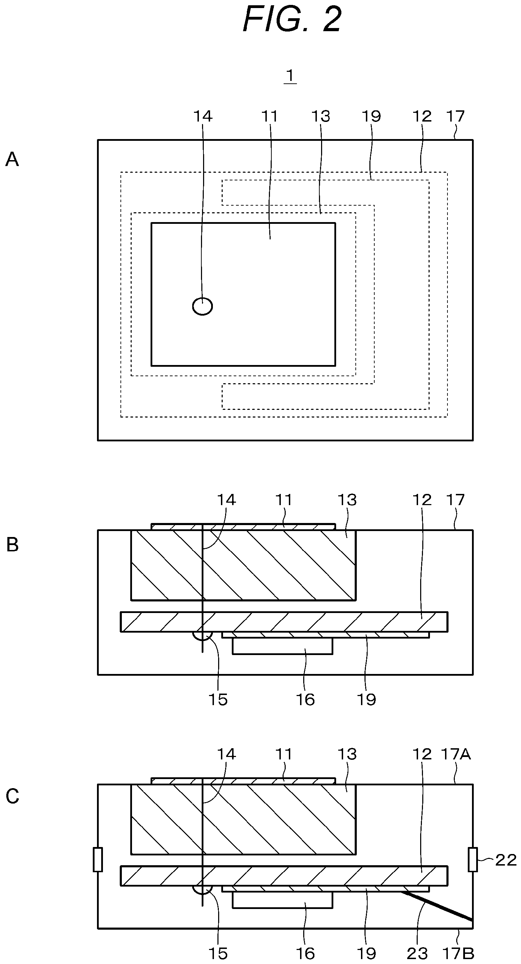

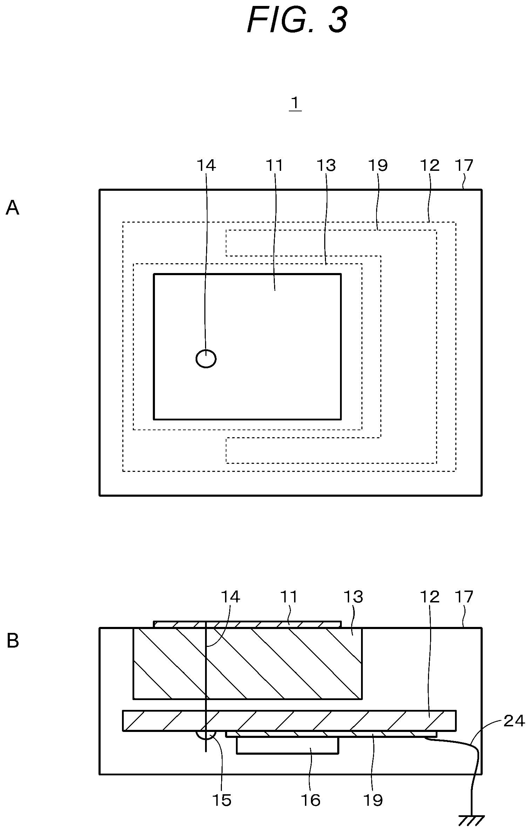

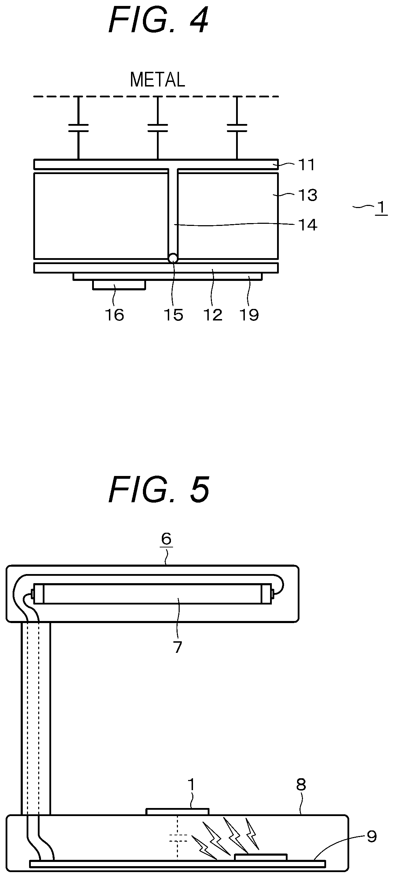

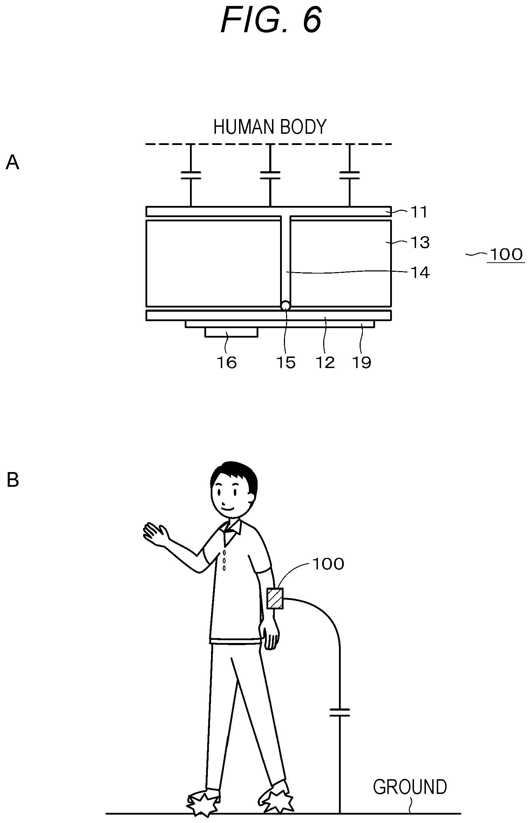

The antenna unit 1a of the antenna device 1 includes a first antenna element that is in contact with a metal and a second antenna element. An example of the antenna device 1 will be described with reference to Fig. 2A (plan view), Fig. 2B (cross-sectional view), Fig. 2C (cross-sectional view), Fig. 3A (plan view), Fig. 3B (cross-sectional view), and board diagrams (Figs. 5 and 6) in which the rectifier circuit 2 (to be described later) is mounted. As illustrated in Figs. 2A, 2B, 2C, 3A, and 3B, a first antenna element 11 that is in contact with or connected to the industrial product metal portion is configured in a plate shape (patch shape). The first antenna element 11 has a plate shape including a conductor such as gold, silver, aluminum, copper, iron, nickel, an alloy, or the like. The contact surface of the first antenna element 11 with metal may be coated with a resin. The first antenna element 11 has a shape such as a linear shape, a pin shape, a hemispherical shape, or an uneven shape in accordance with the shape of the industrial product metal portion. The industrial product metal portion and the first antenna element 11 are brought into contact with or connected to each other by a method such as welding, mechanical coupling (caulking or the like), adhering using a conductive adhesive, or bonding to an iron material or the like using magnetism of a magnet or the like.

Furthermore, as the first antenna element 11, for example, a conductive resin, a conductive rubber, or the like in which carbon, metal, or the like is blended may be used. By using the conductive resin, for example, electrodes of various shapes can be easily formed. Furthermore, by using the conductive rubber, an electrode that can be elastically deformed, an electrode having high adhesion, and the like can be configured. In addition, the material of the first antenna element 11 is not limited, and the materials described above may be used alone, or the electrodes may be configured by combining the materials.

In Figs. 2B and 2C, for example, the plate-like (patch-like) first antenna element 11 and a device board (circuit board) 12 are disposed to face each other, and a dielectric plate 13 is interposed between the first antenna element 11 and the device board 12. The space between the first antenna element 11 and the device board 12 may be formed without providing the dielectric plate 13.

In order to electrically connect the first antenna element 11 and the device board 12, one end of the first antenna element 11 and one end of a conductive pin 14 are electrically connected, and the other end of the conductive pin 14 penetrates the device board 12 and is soldered to a signal path electrode on the back surface of the device board 12. The first antenna element 11 and a ground of the device board 12, which is formed to have a copper foil pattern, constitute the antenna unit 1a. The ground is the second antenna element. The antenna unit 1a has a structure of a T-type antenna using a flat plate as an antenna element. A connection portion between the signal path electrode of the device board 12 and the conductive pin 14 serves as a feeding point 15 of the antenna. A circuit unit 16 is provided on, for example, the back surface of the device board 12.

The antenna device having the above-described configuration is housed in a case 17. The contact surface of the case 17 other than the first antenna element 11 includes an insulating material such as a resin. Furthermore, a case side surface, a case opposite surface, and the like other than the contact surface with the metal that is intended to take in energy also include an insulating material.

Fig. 2C illustrates a configuration in which the case 17 includes a case 17A including a non-metal such as a resin or the like and a case 17B including a metal. A ground 19 on either the upper or lower surface of the device board 12 and the case 17B can be electrically connected to each other. That is, the case 17A including an insulating material on which the first antenna element 11 is provided and the case 17B including a metal material constituting the opposite surface of the case 17A may be connected by a connection unit 22 such as a screw, and the case 17B and the ground 19 of the device board 12 may be connected by a wire 23.

Furthermore, as illustrated in Figs. 3A and 3B, an insulated covered cable 24 may be further connected to the ground 19 of the device board 12, which is formed to have a copper foil pattern, by solder or the like to be grounded to the earth ground. The first antenna element 11 described above is formed in a plate shape, and is configured to be in contact with or connected to the industrial product metal portion. However, the first antenna element 11 and the feeding point 15 can be directly connected to each other using the insulated covered cable or the like with respect to the industrial product metal portion.

There is a great deal of electric field energy around us, which can be divided into a low frequency component and a high frequency component. For example, a leakage electric field (50 Hz/60 Hz) from a home AC power supply, noise present in the vicinity of a personal computer, a voltage or the like generated when a person walks is a low frequency component. These are referred to as quasi-electrostatic fields (near field). On the other hand, radio broadcasting (AM/FM), television broadcasting, a mobile phone radio wave, or the like is a high frequency component. These are referred to as a radio wave (far field).

As illustrated in Fig. 4, the first antenna element 11 of the antenna unit 1a described above is brought into contact with the industrial product metal portion. The first antenna element 11 is attached to industrial product metal portion. Since the industrial product metal portion is used as an antenna, the antenna device 1 can take in energy of both a quasi-electrostatic field such as noise which is a leakage current and a radio wave such as a broadcast wave.

For the antenna device 1, it is preferable that the first antenna element 11 is directly connected to the industrial product metal portion, but in this example, the antenna element is basically in surface contact to increase the capacity. It is sufficient that it is in contact with or connected to the metal portion. In the case of contacting, it may be fitted in a pin structure, a hemispherical shape, or an uneven shape other than a planar shape. In the case of connecting, it may be connected directly by screwing, soldering, welding, or the like or via an insulator (or air) such as an insulating covered cable or conductive rubber. The antenna unit 1a including the first antenna element 11 in contact with the metal and the ground electrode 19 of the device board 12, or a separate second antenna element 20 can receive electric field energy to generate power.

Note that it is sufficient that the first antenna element 11 can be capacitively coupled with a metal even when a space or an insulator is interposed. Fig. 5 illustrates a desk light 6 with a fluorescent lamp 7. The antenna device 1 is attached to a main body 8 in a state of being housed in, for example, a resin case.

A circuit unit such as an inverter is mounted on a board 9 housed in the resin case of the main body 8. The inverter turns on the fluorescent lamp 7 by once changing a commercial power supply of 50 Hz or 60 Hz to a direct current and further changing to a high-frequency signal of 20 to 50 kHz. In this lighting method, there is no flicker peculiar to a fluorescent lamp as compared with a case of lighting at a frequency of a commercial power supply. As indicated by arrows, spatial noise is generated from the circuit unit. The antenna device 1 is spatially coupled to a board on which the circuit unit such as the inverter is mounted, and can induce a voltage by the spatial noise. Experiments have confirmed that a voltage of about 4.4 V is induced, for example, in a case where a fluorescent lamp is turned on.

Furthermore, the present technology is not limited to the industrial product metal portion, and as illustrated in Fig. 6A, the first antenna element 11 of the antenna unit 1a described above is brought into contact with a human body. The first antenna element 11 is attached to a part of the human body, for example, an arm. Since the human body is used as an antenna, an antenna device 100 can take in energy of both a quasi-electrostatic field such as noise which is a leakage current and a radio wave such as a broadcast wave. The antenna device 1 that is in contact with or connected to the industrial product metal portion and the antenna device 100 that is in contact with the human body have the same configuration.

As illustrated in Fig. 6A, the human body and the first antenna element 11 are electrically in contact with each other by capacitive coupling. For the antenna device 100, it is preferable that the first antenna element 11 is in direct contact with the human body, and it is basically preferable that the antenna element is in surface contact to increase the capacity. However, the present technology is not limited to the surface, and may have a pin structure, a hemispherical structure, or a structure in which fitting is performed with unevenness in addition to a planar shape as long as the structure is in contact with the human body. The antenna device 1 including the first antenna element 11 in contact with the human body and the ground electrode of the device board 12, or a separate second antenna element 20 can receive electric field energy to generate power.

Furthermore, as illustrated in Fig. 6B, for example, in a state where the antenna device 100 (hatched portion) is attached to the arm, it can be considered that a pseudo ground is formed by capacitive coupling between the ground of the device board 12 or the separate second antenna element 19 (Fig. 6) and the ground of the earth. This antenna device 100 can receive a low frequency quasi-electrostatic field. The reason why the antenna device 100 resonates at a low frequency of 50 Hz, for example, is considered that the blood vessel is shown as an antenna. In this manner, the antenna device 100 can receive the radio wave in a wide frequency range. Thus, the electric field energy can be taken in without being restricted by a place where the person wearing the antenna device according to the present technology is present.

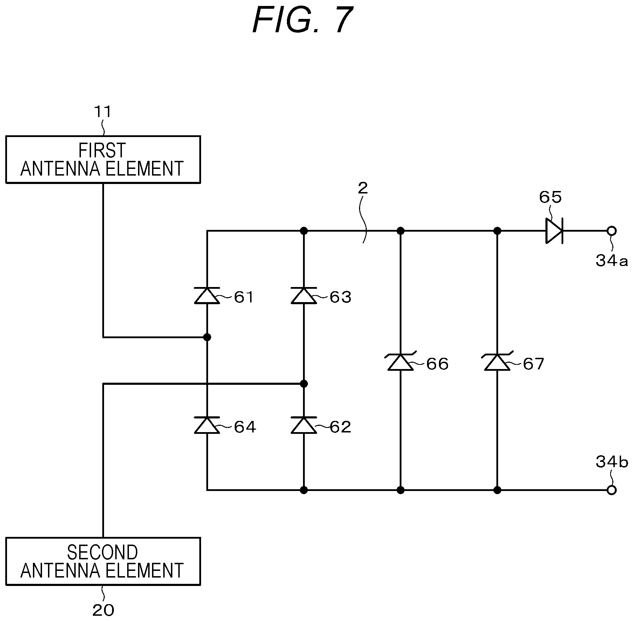

An example of the rectifier circuit 2 connected to the antenna device 1 is illustrated in Fig. 7. Note that, in the following description, the antenna device 1 in which the antenna element is coupled to the industrial product metal portion will be described, but the same applies to a rectifier circuit in which the first antenna element 11 is connected to the antenna device 100 coupled to the human body. In the case of using a small voltage as in energy harvesting, rectification can be performed by a normal rectifier circuit, but a certain level of voltage is required in order to store energy quickly. Furthermore, in terms of efficiency, since the full-wave rectifier circuit can increase the voltage of the AC signal and take in all, even when the loss of the diode is included in the diode adopted for rectification this time, the full-wave rectifier circuit is used.

In the rectifier circuit, it is important that the leakage current of the diode at the time of reverse bias is very small. In a case where there is the leakage current, the full-wave rectifier circuit is suitable. As illustrated in Fig. 7, diodes 61 and 64 are connected in series, and diodes 63 and 62 are connected in series. A connection point between an anode of the diode 61 and a cathode of the diode 64 is connected to the first antenna element 11, and a connection point between an anode of the diode 63 and a cathode of the diode 62 is connected to the second antenna element 20. A connection point between a cathode of the diode 61 and a cathode of the diode 63 is connected to one output terminal 34a via a backflow prevention diode 65, and a connection point between an anode of the diode 64 and an anode of the diode 62 is connected to the other output terminal 34b. An electrostatic countermeasure varistor 66 and an IC protection Zener diode 67 (for example, a Zener voltage is 6.5 V) are connected in parallel between the output terminals 34a and 34b.

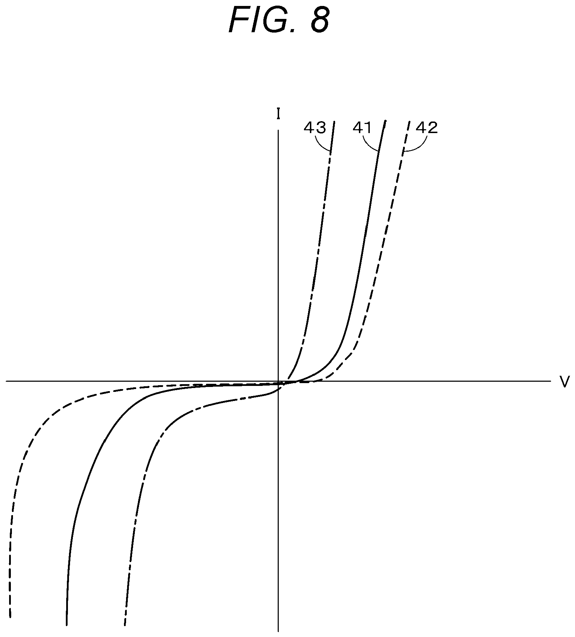

Note that, although it is configured by a discrete diode, it may be configured by a dedicated IC. Fig. 8 and Table 1 illustrate results of measurement of a forward voltage Vf and a reverse current Is of the diode used in a rectifier circuit 4. The diode product number 1N60 was measured using silicon and germanium products, and the other product number ISS108 was evaluated using germanium products manufactured by different manufacturers. In Fig. 8, a curve 42 is a characteristic of 1N60 (silicon), a curve 41 is a characteristic of 1N60 (germanium), and a curve 43 is a characteristic of ISS108 (germanium).

**[Table 1]**

| | Room temperature | | Rectification through metal antenna |
|---|---|---|---|
| | Forward voltage Vf [mV] | Reverse current Is [µA] | |
| 1N60 (silicon) | 367 | 1 | ○ |
| 1N60 (germanium) | 303 | 7 | × |
| 1SS108 | 162 | 26 | × |

A current flowing when a voltage is applied in the reverse direction of the diode is the reverse current Is. The measurement data in Table 1 is data obtained when 10 V is applied in the reverse direction of the diode. The forward voltage Vf is a voltage at which a forward current (1 mA) starts to flow through the diode.

In a case where the output of the antenna unit 1a described above is rectified, it has been found that the diode 1N60 (silicon) in which the current does not flow in the reverse direction can take in power more than the diode in which the voltage at which the current starts to flow in the forward direction is low. The rectified input is an alternating current, and the reverse current Is when the forward voltage Vf of the diode is applied in the reverse direction is data of 10 V in Table 1. Therefore, when the reverse current Is when the same voltage as Vf is applied in the reverse direction is calculated from the data, 1N60 (silicon) is 0.036 µA, 1N60 (germanium) is 0.21 µA, and ISS108 (germanium) is 0.5 µA. Thus, the ratio of the reverse current Is at the time of the forward current (1 mA)/forward voltage Vf is calculated to be 1/27778 for 1N60 (silicon), 1/4762 for 1N60 (germanium), and 1/2000 for ISS108 (germanium). That is, for the diode used in the rectifier circuit 2, the above-described ratio needs to be larger than about 4700 times, and preferably, the above-described ratio is 10,000 or more. As a result, among three diodes described as examples, 1N60 (silicon) has the most suitable characteristics.

Moreover, considering the characteristics of the diode, the reverse current Is when applied in the reverse direction is preferably small, and when a reverse resistance value is calculated using data of 10 V, 1N60 (silicon) is 100 MΩ, 1N60 (germanium) is 1.43 MΩ, and ISS108 (germanium) is 0.38 MΩ. That is, the resistance value for preventing the current from flowing in the reverse direction is preferably large, and for the diode used in the rectifier circuit 2, the above-described resistance value needs to be larger than 1.43 MΩ, and is preferably 10 MQ or more. As a result, among three diodes described as examples, 1N60 (silicon) has the most suitable characteristics.

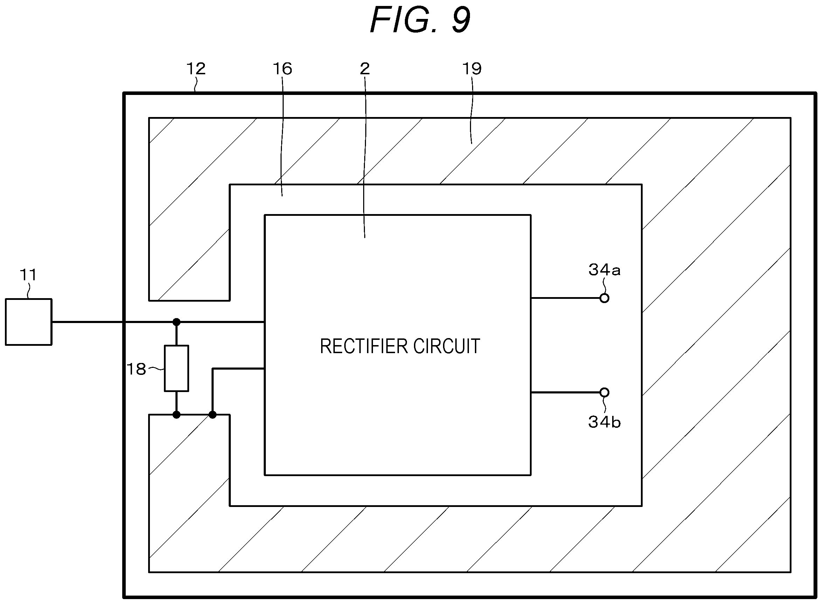

As illustrated in Fig. 9, the ground 19 including the copper foil pattern is formed on a circuit board 12 included in the antenna device 1, and the first antenna element 11 and the ground 19 of the device board 12, which includes the copper foil pattern, constitute the antenna unit 1a. The ground 19 is the second antenna element. Furthermore, as an electrostatic countermeasure, an electrostatic protection component, for example, a varistor 18 is inserted between the first antenna element 11 in contact with or connected to the metal and the ground of the reception device, which includes the copper foil pattern. Note that the varistor 18 may be connected between the output terminal 34a and the ground 19.

The circuit unit 16 includes the rectifier circuit 2. The rectifier circuit 2 does not overlap the ground 19 of the device board 12, which includes the copper foil pattern. An input line output from the antenna element 11 to the rectifier circuit 2 is connected in series to the rectifier circuit without interposing a matching circuit. The charger 3 and the energy storage device 4 (not illustrated) may be included in the circuit unit 16, or may be provided separately.

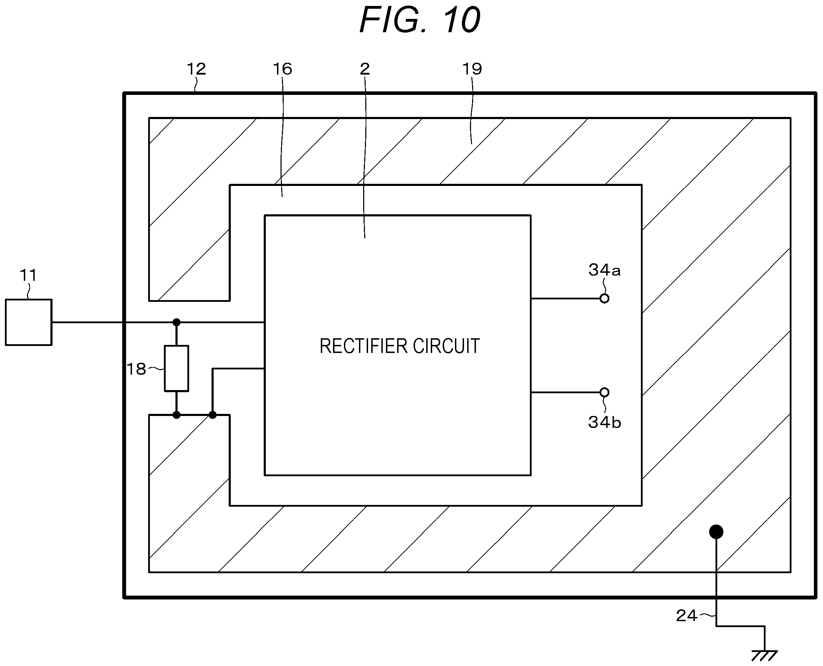

Fig. 10 illustrates a configuration of the device board 12 corresponding to Figs. 3A and 3B. The ground 19 (indicated as a hatched region) of the device board 12, which includes the copper foil pattern, is grounded to the earth ground via the insulated covered cable 24. The earth ground may function as a low potential ground such as a wide conductive plate including the earth. Note that the varistor 18 may be connected between the output terminal 34a and the ground 19.

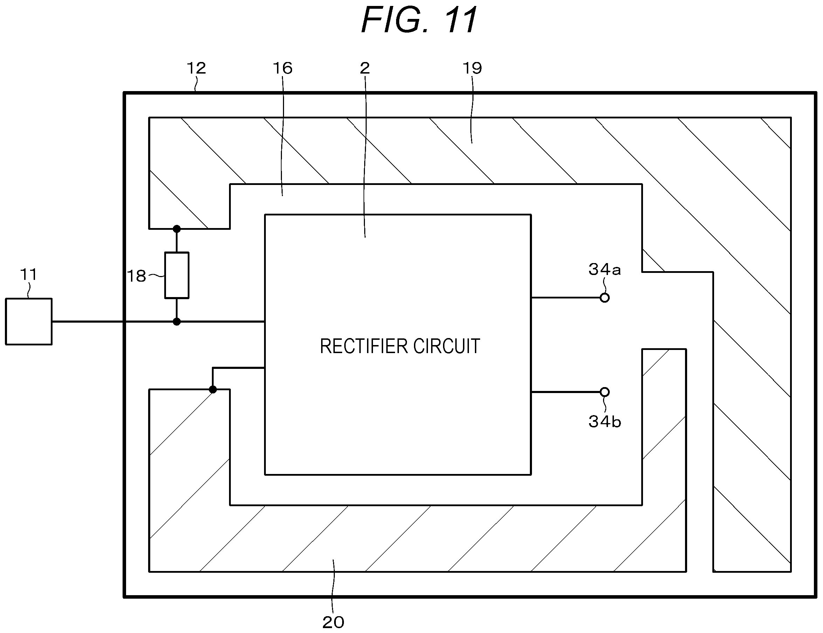

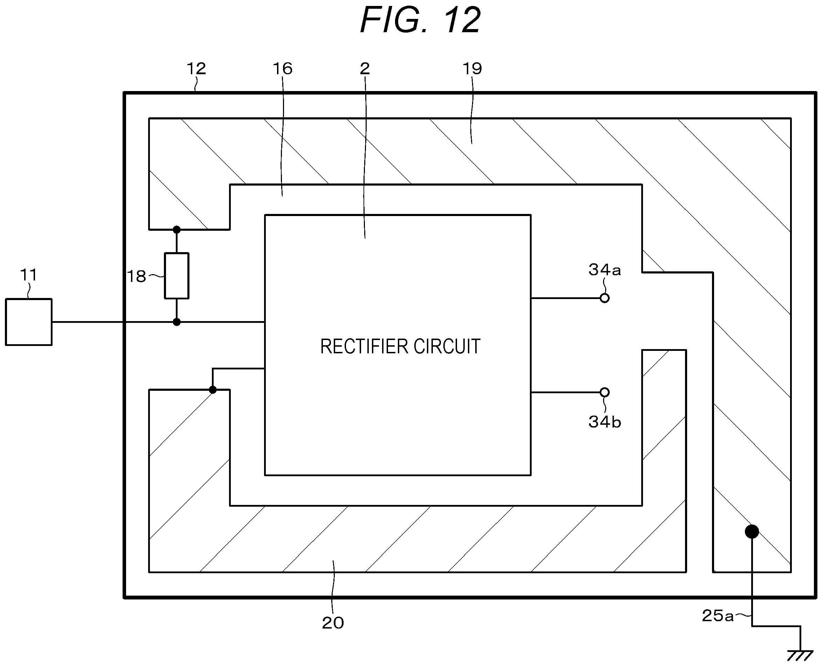

Next, as illustrated in Fig. 11, a separate second antenna element 20 (illustrated as a hatched region) including a copper foil pattern may be made on the board described above. In this case, it is necessary to prevent the separate second antenna element 20 from being in contact with or being connected to the industrial product metal portion that is intended to take in energy. Furthermore, as illustrated in Fig. 12, an insulated covered cable 25a may be further connected to the ground 19 (indicated as a hatched region) of the device board 12, which includes the copper foil pattern, to be grounded to the earth ground. Furthermore, in Figs. 11 and 12, it is formed on a separate board, but it may be formed on a metal portion of a housing configured not to come into contact with the metal on the opposite side of the metal contact surface of the reception device. Also in this case, as an electrostatic countermeasure, an electrostatic protection component, for example, a varistor 18 can be inserted between the first antenna element 11 in contact with the metal and the ground of the reception device. Note that the varistor 18 may be connected between the output terminal 34a and the ground 19.

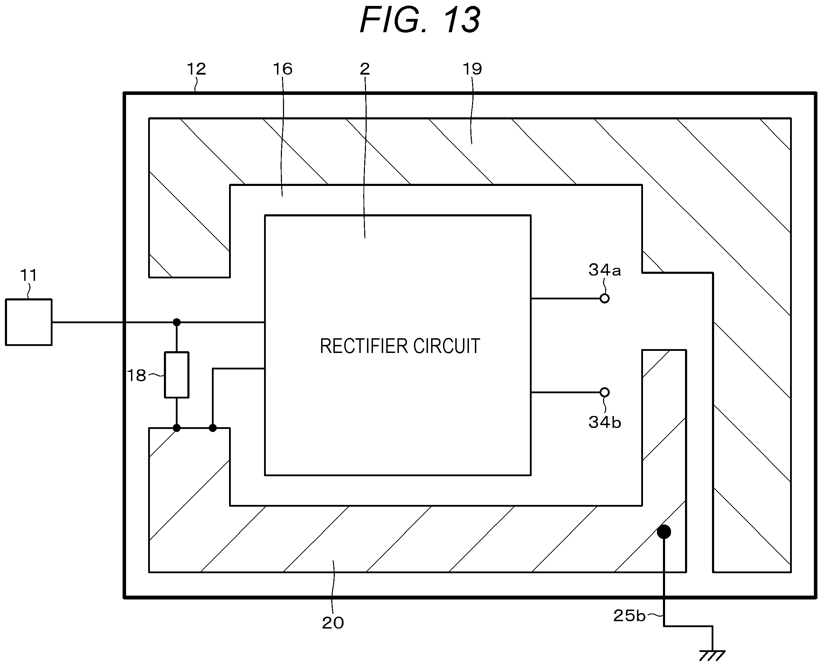

Moreover, as illustrated in Fig. 13, as an electrostatic countermeasure, an electrostatic protection component, for example, a varistor 18 may be inserted between the first antenna element 11 in contact with the metal and the second antenna element 20, and an insulating covered cable 25b may be connected to the second antenna element 20 to be grounded to the earth ground. In this case, the second antenna element 20 can extract much more power than the electric field generated with the ground of the earth by capacitive coupling. In a case where it is assumed that power is extracted from a metal product such as a microwave oven or a refrigerator in a room, it is required to discharge the static electricity to the ground as an electrostatic countermeasure. In a case where power is extracted from a metal portion of such a product, it is necessary to cope with the case by connecting the product with an insulating covered cable or the like as described above. Note that the varistor 18 may be connected between the output terminal 34a and the ground 19.

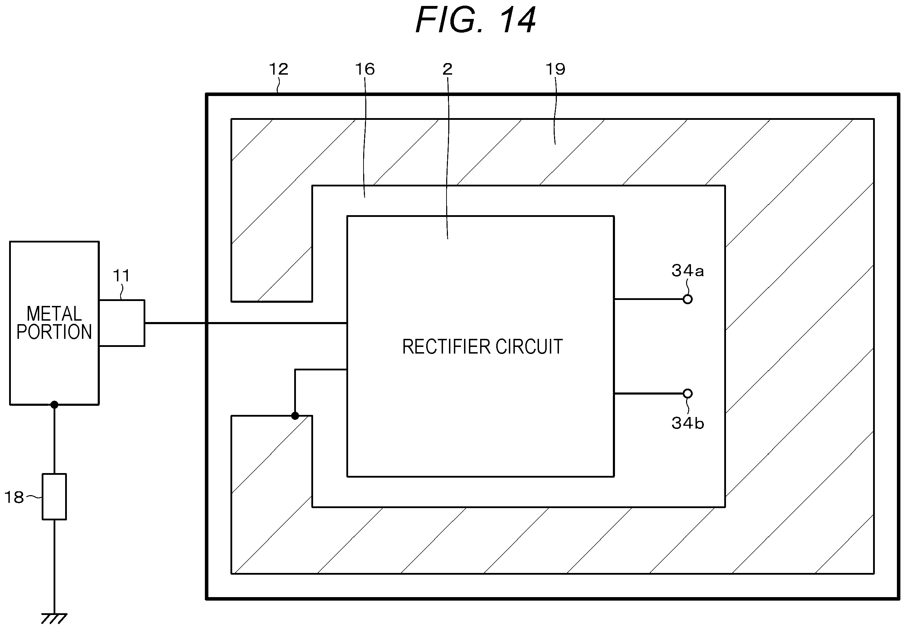

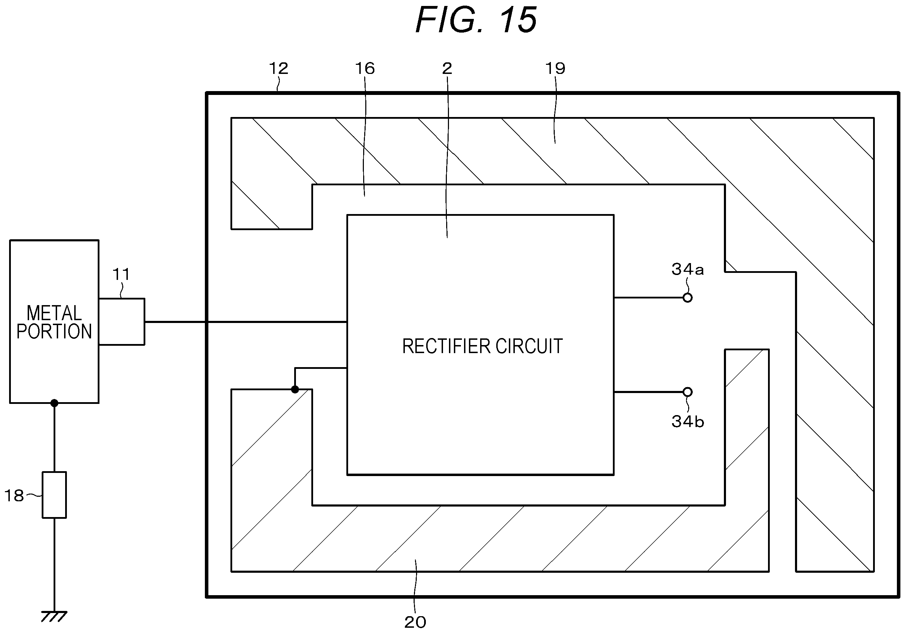

Figs. 14 and 15 are diagrams illustrating modification examples of Figs. 9 and 11. That is, in a case where grounding is performed using an insulating covered cable directly from the industrial product metal portion to the earth ground, it is grounded with an electrostatic protection component such as the varistor 18 or the like interposed in the middle of the insulating covered cable. In the case of the existing electrical appliance that requires a separate grounding connection, the above-described configuration is used.

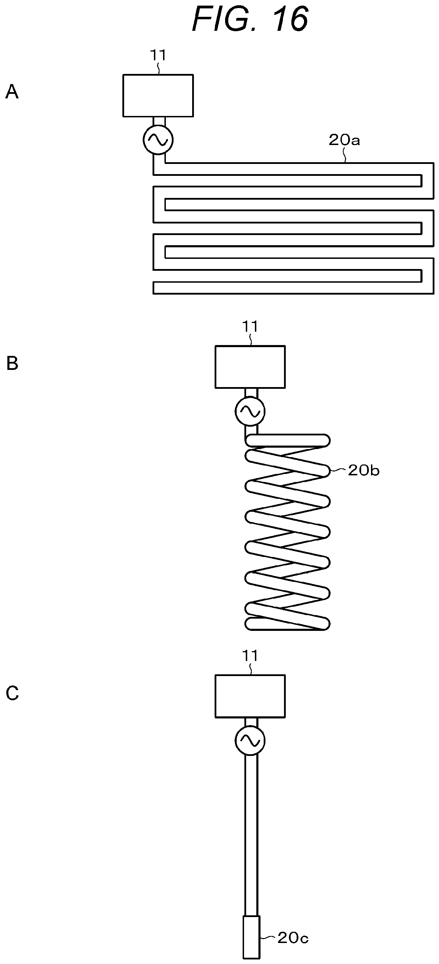

Other configurations of the second antenna element 20 are illustrated in Fig. 16. Fig. 16A illustrates a configuration of a meander line 20a, and Fig. 16B illustrates a configuration of a coil 20b. The coil 20b may be configured as a chip coil. Fig. 16C illustrates a configuration in which an inductor 20c is provided at a distal end portion. These configurations can reduce the occupation area, increase the antenna length, and increase the induction voltage. In addition to this, the second antenna element 20 may be configured as a plate-like antenna having a broadband property, and may be used in a combination with the antennas illustrated in Fig. 16 or in a combination with the antennas described above as appropriate.

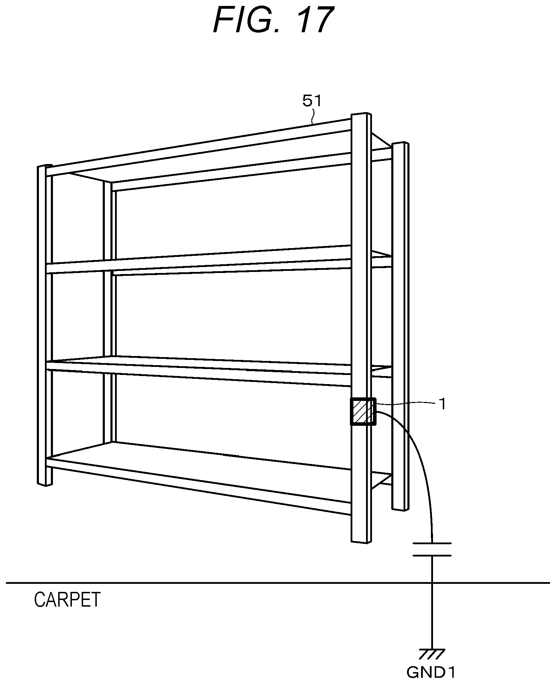

As illustrated in Fig. 17, the first antenna element 11 of the antenna device 1 described above (see Fig. 4) is brought into contact with the industrial product metal portion, for example, a metal of a metal rack 51. The first antenna element 11 is attached to one surface of the metal rack 51. Electrically, the metal portion and the first antenna element 11 are brought into contact with each other by capacitive coupling. Since the metal portion of the metal rack 51 is used as an antenna, the antenna device 1 can take in energy of both a low frequency quasi-electrostatic field such as noise and a radio wave such as a broadcast wave.

As illustrated in Fig. 17, for example, the metal rack 51 exists in an electrically floating state on a carpet which is an insulating material, and in a state where the antenna device 1 (hatched portion) including the antenna unit 1a is stuck, the circuit configuration of Figs. 9 and 11 can be adopted. In this case, it can be considered that the ground 19 (not illustrated herein) of the device board 12 or the separate second antenna element 20 (not illustrated herein) and the earth ground (GND1) are capacitively coupled to constitute a large antenna unit. The antenna unit can receive a low frequency quasi-electrostatic field.

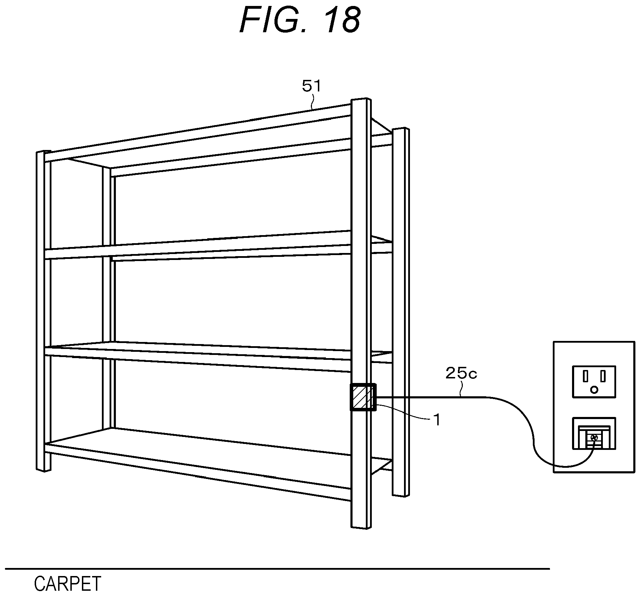

When Fig. 18 has the circuit configuration as in Fig. 14, the effect of taking in energy from a space is further enhanced. That is, the separate second antenna element 20 can be implemented by being connected, for example, to the earth ground (GND) at a grounding outlet via an insulating covered cable 25c.

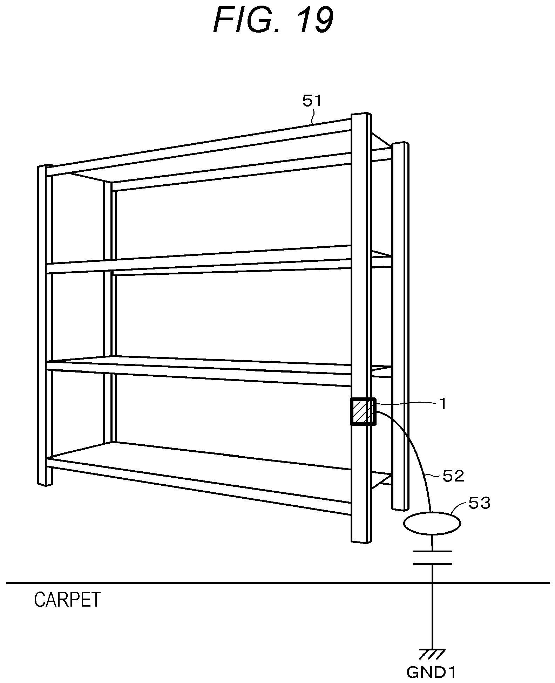

Moreover, as illustrated in Fig. 19, the antenna device 1 (hatched portion) including the antenna unit 1a may be connected to a metal plate 53 using an insulating covered cable 52, and the metal plate 53 may be brought close to the earth ground (GND1) so that the antenna device is capacitively coupled to the earth ground (GND1).

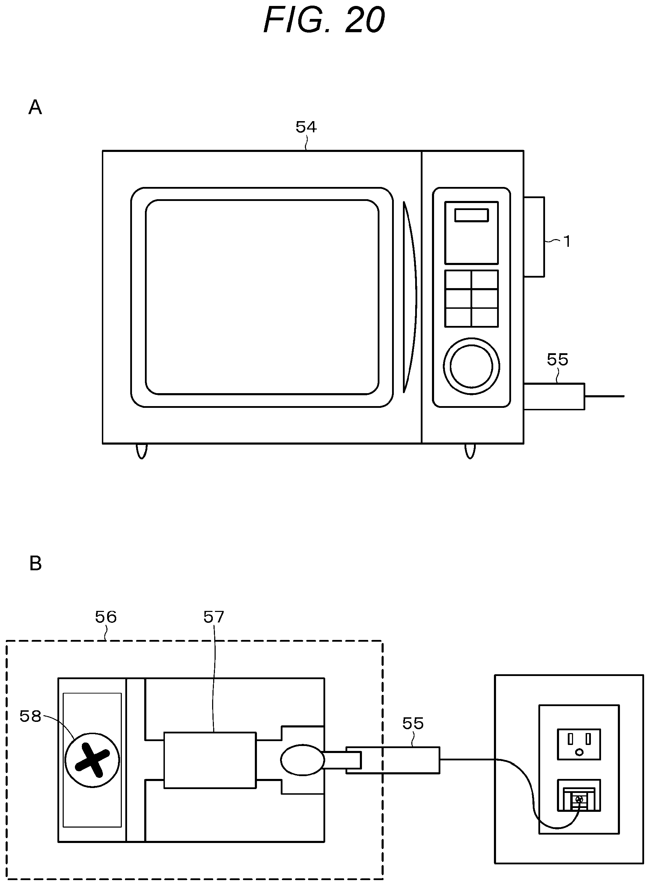

Next, a configuration example for the examples of Figs. 14 and 15 is illustrated in Figs. 20A and 20B. In a case where a grounding cable 55 attached to a microwave oven 54 is grounded, an electrostatic protection component 56 is provided between the grounding cable 55 and a grounding terminal of a power supply outlet. In the electrostatic protection component 56, a screw portion 58 for connecting the grounding cable 55, a varistor 57 for electrostatic protection, and the like are provided on a board, and the grounding cable 55 is soldered on the board.

In this manner, the antenna device 1 can receive the electric field energy in a wide frequency range. Thus, in the antenna device described above, it is possible to easily take in wide electric field energy only by contacting with metal. Moreover, in a case where it is desired to increase the taken-in amount, connection such as soldering or the like to the industrial product metal portion is more preferable. Furthermore, in a case where the metal rack includes iron, the connection may be maintained by a magnet.

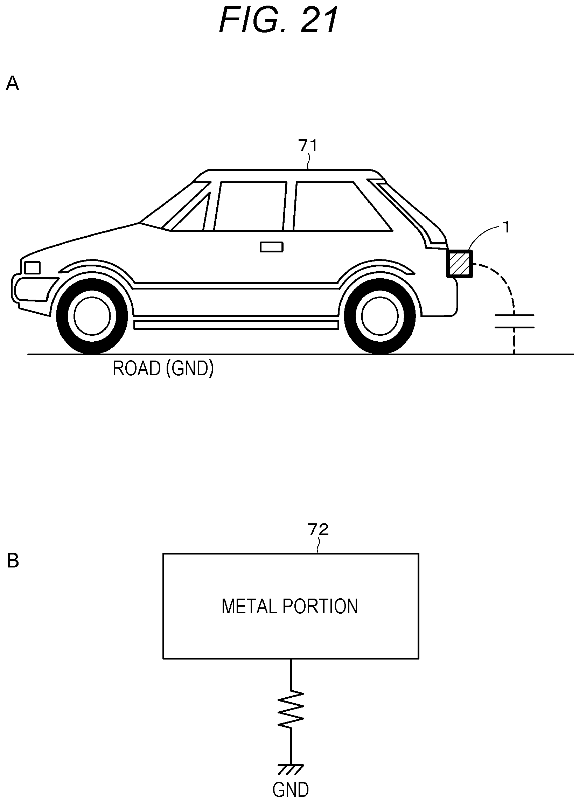

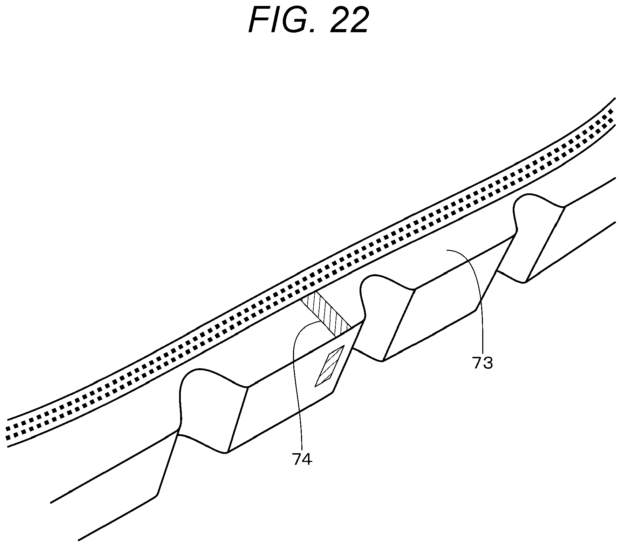

Another example of the antenna device will be described with reference to Figs. 21A, 21B, and 22. Another example is a vehicle (in particular, a vehicle body). As illustrated in Fig. 21A, in a state where the antenna device 1 (hatched portion) is attached to a vehicle 71, in the configuration of Figs. 9 and 11, it can be considered that the ground of the device board 12 (see Fig. 4) or the separate second antenna element 20 and the earth ground are capacitively coupled to form a large antenna device 1. The antenna device 1 can receive the low frequency quasi-electrostatic field, and also take in the energy of the quasi-electrostatic field and the energy of the radio wave, which are generated in the space.

In general, since the vehicle (vehicle body) includes metal, static electricity is likely to be generated. Furthermore, recently, silica is mixed instead of carbon of the related art in order to improve wear resistance of tires. Since silica does not conduct electricity, in order to release static electricity, measures are taken such as providing a conductive slit 74 (indicated by hatching) in a part of a tire 73 as illustrated in an enlarged cross section in Fig. 22. The conductive slit 74 releases the generated static electricity. However, since the contact area between the conductive slit 74 and the ground is limited, the tire has a resistance value of about 10 MΩ. That is, the circuit configuration is grounded with a resistance as illustrated in Fig. 21B. Therefore, in a case of being viewed from the energy of the quasi-electrostatic field and the energy of the radio wave, which are generated in the current target space, the vehicle is in a floating state in the space. Furthermore, even in a case where the vehicle is not completely insulated from the ground, the metal portion (for example, the vehicle body) 72 and the ground may be coupled with an inductance component instead of the resistor although Fig. 21B illustrates an example of the resistance.

By using a large metal of the vehicle as an antenna in this manner, it is possible to take in more energy of the quasi-electrostatic field and more energy of the radio wave, which are generated in the space. When the energy taken in is rectified and stored in an energy storage device such as a secondary battery, it is not necessary to charge a position detection sensor or the like of a key of the vehicle necessary for the vehicle in the future.

As described above, the antenna includes metal such as a vehicle, a vending machine, a refrigerator, a microwave oven, a metal rack, a guardrail, a mail post, a traffic light, and the like, and the antenna is made with a ground of a power generator or a separate antenna. Therefore, a receivable frequency is not limited by an antenna shape. Furthermore, by adopting a structure in which the ground of the power generator is capacitively coupled to the ground of the earth, it is possible to take in electric field energy in a quasi-electrostatic field other than a radio wave. That is, power or noise leaking from a power cord and an inverter can be converted into energy. In this manner, the metal of the product can be used as one antenna element, and as the antenna, the metal of the product can take in the power induced by the metal itself of the product between the ground of the earth and the power generator.

Since the power generator 1 of the present technology can be used in a state of being in contact with or connected to a sensor that is used in a smart factory or a smart city and requires battery replacement or power supply and can supply energy to the sensor, it is possible to efficiently utilize the energy. Therefore, it may be related to Goal 7 "Affordable and Clean Energy" of Sustainable Development Goals (SDGs) adopted at the UN summit in 2015.

In a case where it is assumed that power is extracted from a metal product such as the microwave oven, the refrigerator, or the like in a room from which the static electricity needs to be discharged to the ground as an electrostatic countermeasure, as illustrated in the examples of Figs. 10, 12, 13, 14, and 15, an electrostatic protection component, for example, the varistor 18 is inserted between the microwave oven, the refrigerator, or the like and the first antenna element 11 as the electrostatic countermeasure, and the insulating covered cables 24, 25a, and 25b are connected via the ground 19 of the device or the second antenna element 20 and grounded to the earth ground, so that the electrostatic countermeasure can be taken.

Moreover, in the example of Fig. 13, the second antenna element 20 is connected to the ground of the earth via the insulating covered cable, and thus it is possible to extract much larger power as compared with the case of the capacitive coupling. In a case where the power is extracted from the metal portion of such a product, it is necessary to cope with the case by connecting the product with the insulating covered cable or the like as described above.

Similarly to the antenna device in which the first antenna element 11 is directly connected to the industrial product metal portion, the antenna device 100 in which the human body and the first antenna element 11 are in contact with each other by capacitive coupling can be configured. The antenna device 100 has a structure in which the antenna is a human body and an electric field is generated by the ground of the antenna device 100 or by a separate conductor. Therefore, the receivable frequency is not limited by the antenna shape. Furthermore, by adopting a structure in which the ground of the antenna device 100 or the separate conductor is capacitively coupled to the ground of the earth, it is also possible to take in electric field energy in the quasi-electrostatic field other than the radio wave. That is, power or noise leaking from a power cord and an inverter can be converted into energy. In this manner, the human body is used as a conductor, and power induced in the human body itself between the human body and the ground of the antenna device 100 can be taken in.

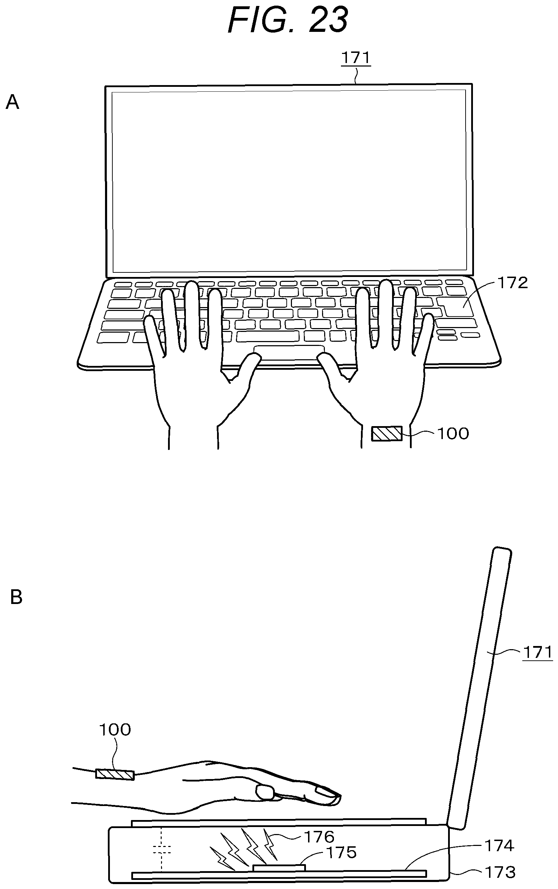

For example, as illustrated in Figs. 23A and 23B, the antenna device 100 (hatched portion) according to the present technology is attached to the operator's wrist (or the back of the hand). A notebook personal computer 171 includes a keyboard 172, and a circuit board 174 and an electronic component 175 such as a processor or a switching power supply attached to the circuit board 174 are present in a resin case 173 on the back side of the keyboard 172. The electronic component 175 generates spatial noise 176 as indicated by arrows in Fig. 20B.

A human body (wrist in this case) is spatially coupled to the circuit board 174 of the notebook personal computer 171 and the electronic component 175 mounted on the circuit board 174 via the resin keyboard 172. Thus, in a case where the keyboard 172 is operated, the keyboard 172 and the human body come into contact with each other, and the antenna device 100 receives the components of the spatial noise 176 emitted from the circuit board 174 and the electronic component 175 via the human body. For example, in a case where the antenna device 100 includes a full-wave rectifier circuit and a capacitor (for example, 1.2 µF) is connected to a subsequent stage of the full-wave rectifier circuit, the terminal voltage of the capacitor increases to 1.2 V in 20 seconds.

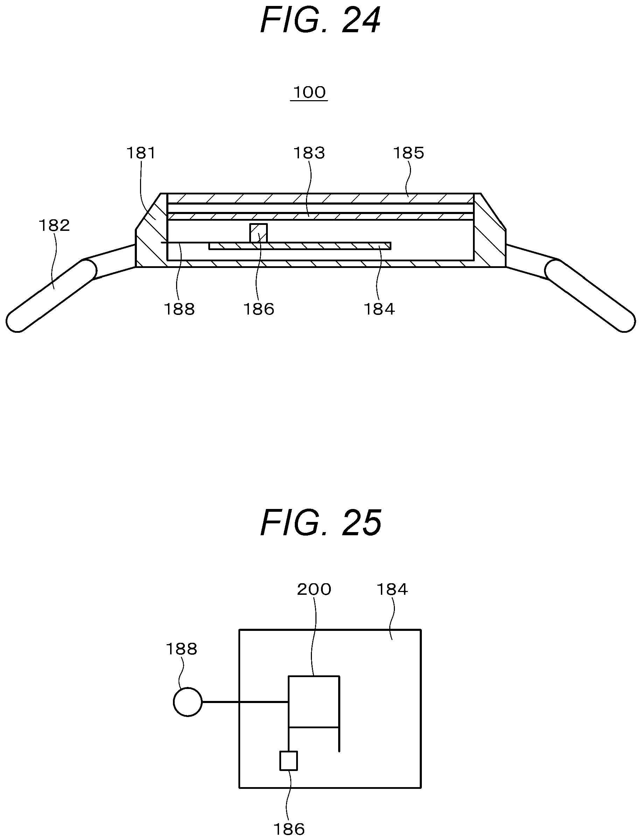

Fig. 24 is a cross-sectional view of a wristwatch-type antenna device 100. A dial 183 and a circuit board 184 are housed in a metal case 181 to which a band 182 is connected, and a glass plate 185 is attached. A rectifier circuit is mounted on the circuit board 184 together with a watch-related component (not illustrated). A chip inductor 186 is connected to the rectifier circuit. The circuit board 184 is attached to the metal case 181 via the connection unit 188.

As illustrated in Figs. 24 and 25, the chip inductor 186 is mounted on the circuit board 184 together with a rectifier circuit 200. The connection unit 188 corresponds to the first antenna element, and the chip inductor 186 corresponds to the second antenna element. The connection unit 188 is in contact with the human body (wrist) via the metal case 181. With such a configuration, the above-described configuration can also be realized in the wristwatch type.

As an application example of the antenna device 1 or the antenna device 100 described above, the following electronic device (power supply device) can be used.

A tracker, a monitoring electronic device, a wristband-type healthcare device, a smart watch, a digital wristwatch, a wireless headphone, a wireless mouse, a hearing aid, a game remote controller, a ring-type input device, and the like are also conceivable.

Note that the tracker is a terminal that transmits positional information acquired by a global positioning system (GPS) via a telephone network or the like, and displays, for browsing, the positional information on a personal computer, a tablet, or a smartphone connected via the Internet.

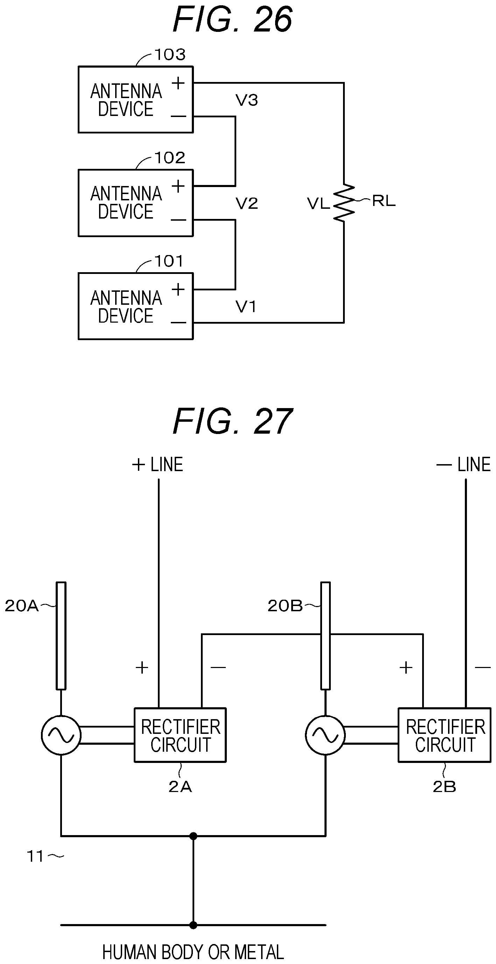

A general configuration for further increasing the output of the antenna device including the antenna unit 1a and the rectifier circuit 2 will be described with reference to Fig. 26. Fig. 26 illustrates a configuration in which antenna devices 101,102 and 103 are connected in series. Each of the antenna devices 101,102 and 103 is the antenna device 1 or the antenna device 100 described above. A voltage VL applied to a load RL is a value (V1 + V2 + V3) obtained by adding the output voltages of the antenna devices.

Fig. 27 illustrates a configuration example for increasing the output voltage of the antenna device. The first antenna element 11 in contact with the industrial product metal portion or the human body is provided, and two second antenna elements 20A and 20B are provided with respect to the first antenna element 11. Each of the second antenna elements 20A and 20B is, for example, another independent board, housing, or the like. A rectifier circuit 2A that rectifies the output of the antenna unit including the antenna elements 11 and 20A is provided, and a rectifier circuit 2B that rectifies the output of the antenna unit including the antenna elements 11 and 20B is provided. The rectifier circuits 2A and 2B are connected in series, and an output line is led from the series connection.

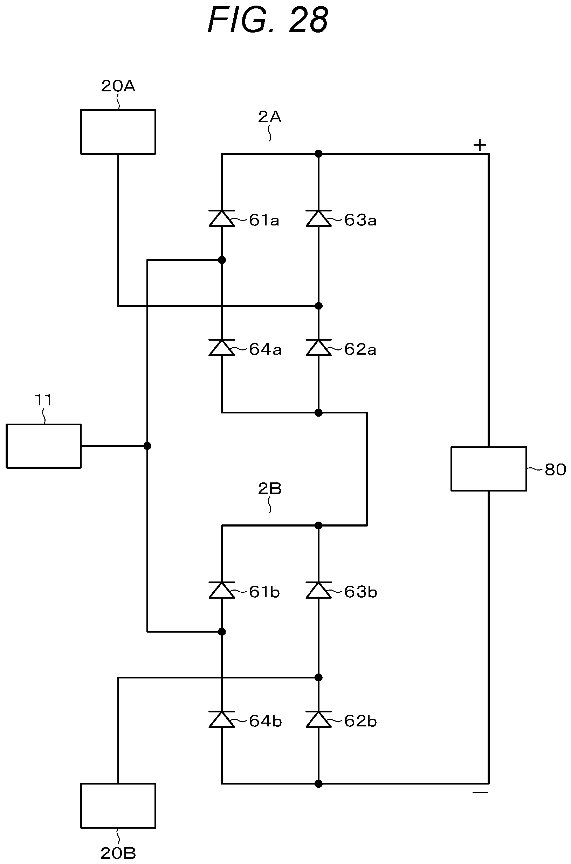

Fig. 28 illustrates a first circuit example. This is an example in which a full-wave rectifier circuit is used as the rectifier circuits 2A and 2B connected in series. A load 80 is connected to the rectifier circuits 2A and 2B. Note that, although not illustrated, Zener diodes 66 and 67 may be connected as elements common to two rectifier circuits 2A and 2B.

In the circuit example, for example, in a case where an output voltage of 4 V is obtained by one antenna device, an output voltage of 8 V can be obtained. A larger output voltage can be obtained by connecting N rectifier circuits, which are two or more, in series. Furthermore, in a case where a frequency of power supply noise or the like that induces a voltage is low, the circuit example of Fig. 28 has a configuration suitable for such a case since it is not necessary to consider a distance between antennas.

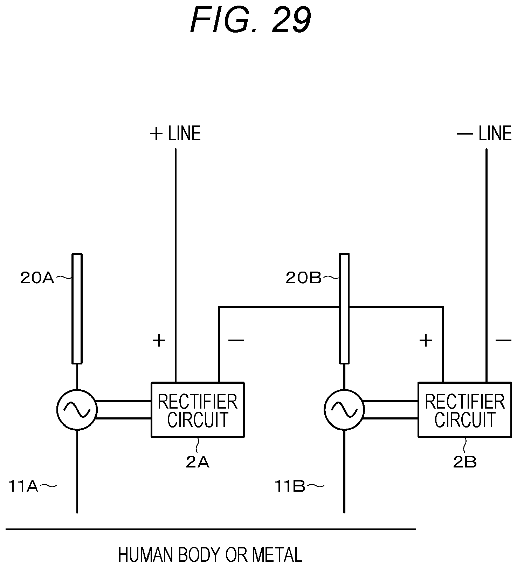

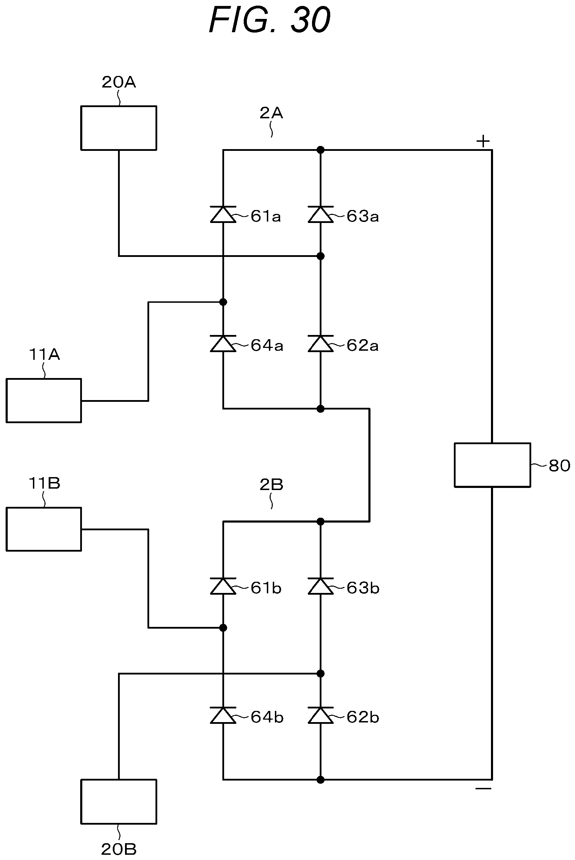

In a second circuit example, as illustrated in Figs. 29 and 30, independent antenna elements 11A and 11B are provided as first antenna elements to be in contact with the industrial product metal portion or the human body. The antenna elements 11A and 11B are in contact with different parts of the industrial product metal portion or the human body.

Fig. 30 illustrates the second circuit example. This is an example in which a full-wave rectifier circuit is used as the rectifier circuits 2A and 2B connected in series.

As described above, for example, in a case where it is desired to set the output of 4 V to the output of 8 V by using one antenna device, it is possible to use a series connection. In this manner, necessary power can be supplied to the subsequent stage.

In the circuit configuration described above, a capacitor may be connected in parallel with the load 80 in order to smooth the rectified voltage. Note that, although not illustrated, Zener diodes 66 and 67 may be connected as elements common to two rectifier circuits 2A and 2B.

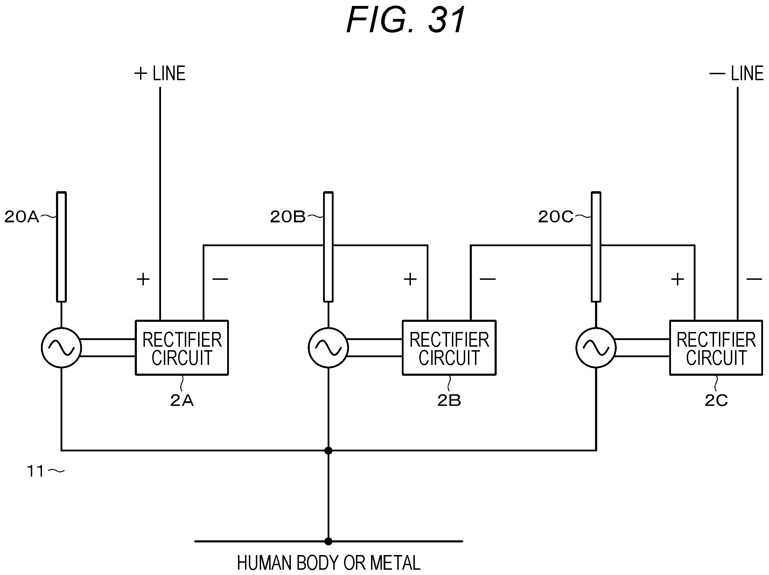

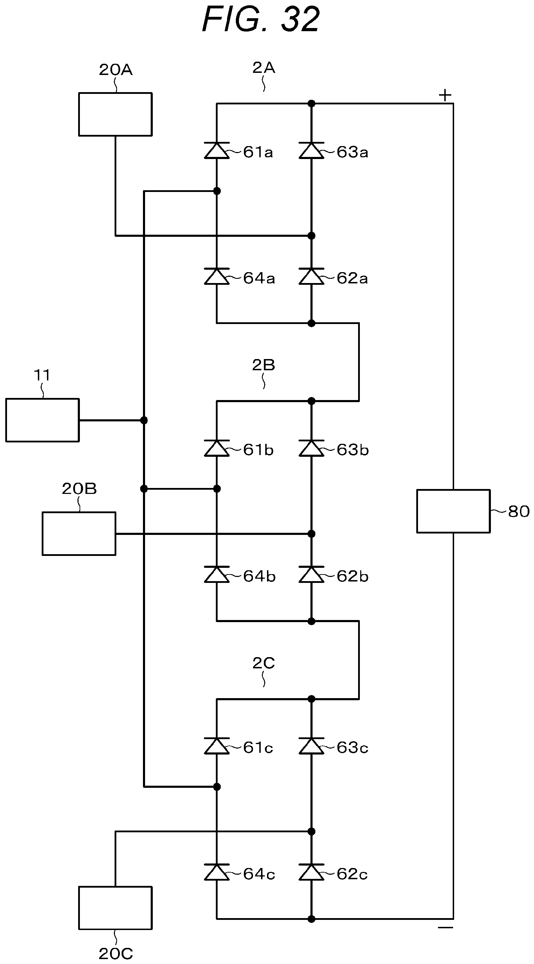

A third circuit example is illustrated in Figs. 31 and 32. In the first circuit example described above, two rectifier circuits 2A and 2B are connected in series, and three rectifier circuits 2A, 2B, and 2C are connected in series. Separate second antenna elements 20A, 20B, and 20C are provided for the first antenna element 11. The output of the antenna units are rectified by the rectifier circuits 2A, 2B, and 2C. Fig. 32 illustrates connection in the third circuit example. With such a configuration, the antenna output can be increased.

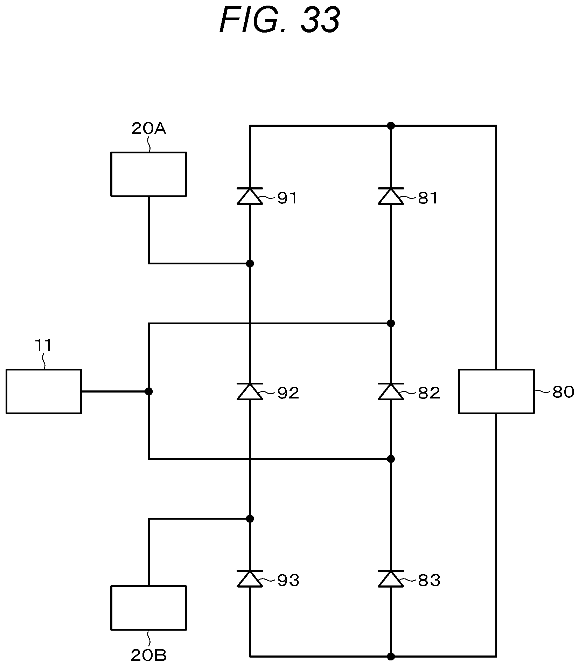

As described above, the present technology provides a configuration in which the number of diodes is smaller in a case where the rectifier circuits are connected in series. A first embodiment in which the present technology is applied to the above-described first example illustrated in Figs. 27 and 28 will be described with reference to Fig. 33. The first embodiment and a second embodiment to be described later are examples of (N = 2, three diodes having the same polarity). Note that, in a circuit configuration to be described below, the Zener diodes 66 and 67 described above are omitted, and the load 80 is connected between the positive and negative output terminals.

A first diode series circuit includes three diodes 81, 82, and 83 connected in series with the same polarity. A second diode series circuit in which three diodes 91, 92, and 93 are connected in series with the same polarity as that of the first diode series circuit is configured. These diode series circuits are connected in parallel. The first antenna element 11 is connected to a first input terminal led from a two-diode connection point of the first diode series circuit. The second antenna elements 20A and 20B are respectively connected to second input terminals led from two-diode connection points of the second diode series circuit. An output is extracted from a parallel connection point between the first diode series circuit and the second diode series circuit.

A cathode of the diode 82 is connected to an anode of the diode 81, a cathode of the diode 83 is connected to an anode of the diode 82, and the load 80 is connected between a cathode of the diode 81 and an anode of the diode 83. Similarly, a cathode of the diode 92 is connected to an anode of the diode 91, a cathode of the diode 93 is connected to an anode of the diode 92, and the load 80 is connected between a cathode of the diode 91 and an anode of the diode 93. The first series circuit including the diodes 81 to 83 and the second series circuit including the diodes 91 to 93 are connected in parallel.

A connection point between the anode of the diode 81 and the cathode of the diode 82 and a connection point between the anode of the diode 82 and the cathode of the diode 83 are connected to the antenna element 11. A connection point between the anode of the diode 91 and the cathode of the diode 92 is connected to the antenna element 20A, and a connection point between the anode of the diode 92 and the cathode of the diode 93 is connected to the antenna element 20B.

In the first embodiment of the present technology illustrated in Fig. 33, the number of rectifying diodes can be reduced from eight to six as compared with the configuration illustrated in Fig. 28. By reducing the number of diodes, a forward voltage drop (for example, 0.2 V) generated in the diode can be eliminated, and the performance can be improved.

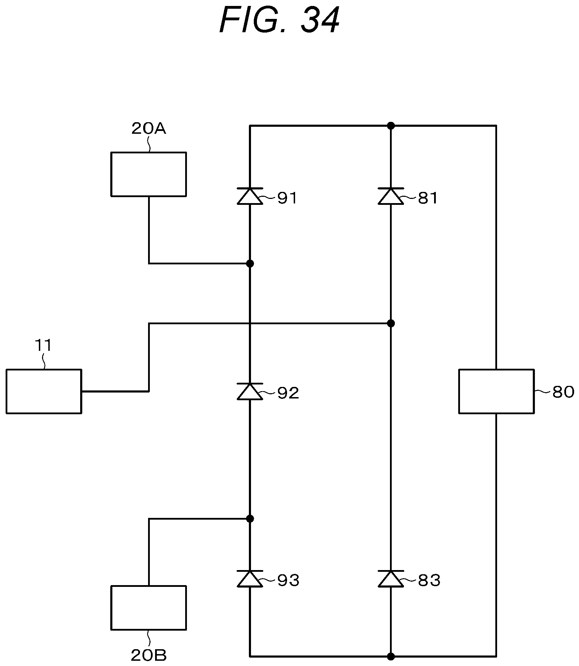

Moreover, when a necessary current path is selected in each phase of the input from the antenna element, the diode 82 can be removed as illustrated in Fig. 34. The antenna element 11 is connected between the anode of the diode 81 and the cathode of the diode 83.

In the modification example of the first embodiment of the present technology illustrated in Fig. 34, the number of diodes can be reduced from eight to five as compared with the configuration illustrated in Fig. 28. By further reducing the number of diodes, a forward voltage drop (for example, 0.2 V) generated in the diode can be eliminated, and the performance can be improved.

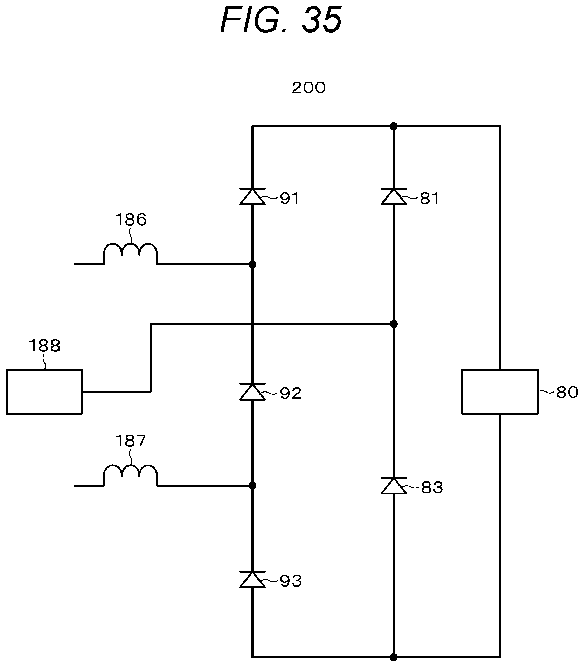

Fig. 35 is a circuit diagram of an example in which two chip inductors as antennas are provided in the configuration of the rectifier circuit 200 in the antenna device 100 illustrated in Figs. 24 and 25 described above. The rectifier circuit 200 has a configuration similar to that of Fig. 34. An element corresponding to the first antenna element 11 is the connection unit 188, and elements corresponding to the second antenna elements 20A and 20B are the chip inductors 186 and 187. Therefore, an increased output can be formed by connecting the rectifier circuit 200 to the antenna device 100.

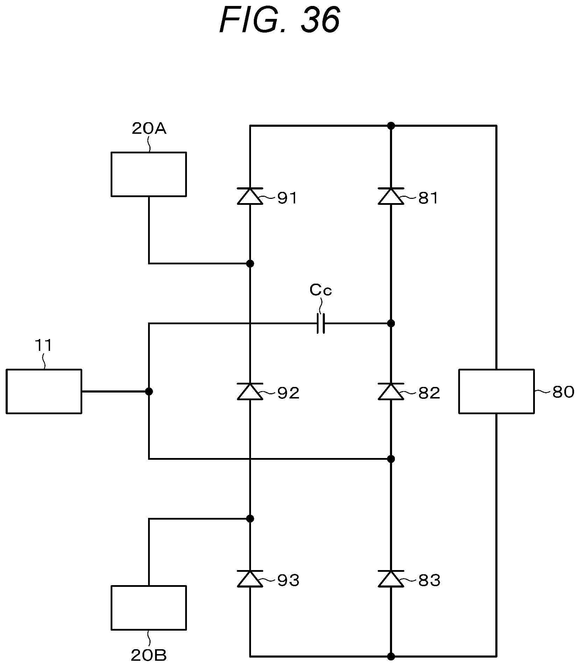

Fig. 36 is another modification example of the first embodiment (configuration of Fig. 34) of the present technology. A DC-cut capacitor Cc is inserted between the antenna element 11 and the connection point between the anode of the diode 81 and the cathode of the diode 82.

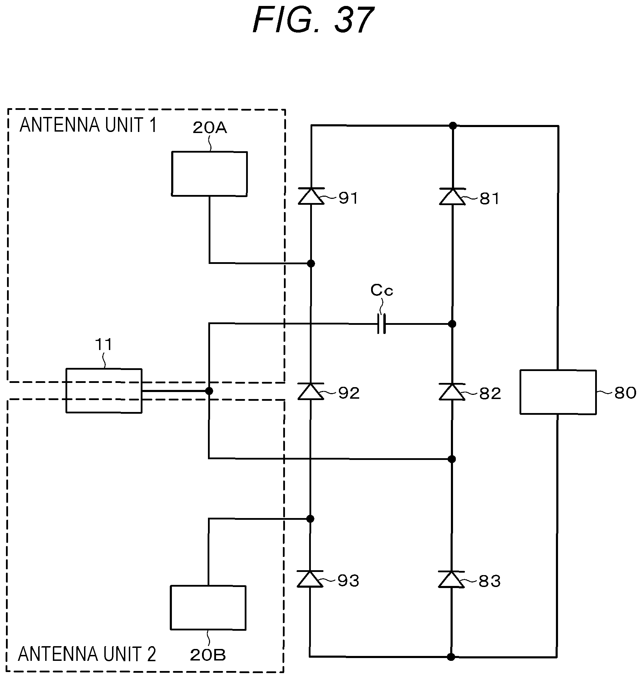

As illustrated in Fig. 37, it is assumed that an antenna unit 1 (preceding stage) including the antenna element 20A and an antenna element 2 (subsequent stage) including the antenna element 20B are installed apart from each other with a distance L. The distance L is preferably smaller, and is positive when a positive wave is received at the same time and is negative when a negative wave is received at the same time as long as the distance L is within λ/4 (λ: wavelength of a reception signal). However, when the distance L increases and the phases of the signals induced by the antenna unit 1 and the antenna unit 2 deviate from each other, there is a problem that the direct current induced by the antenna unit 2 in the subsequent stage is lost via the antenna unit 1. The capacitor Cc prevents this problem.

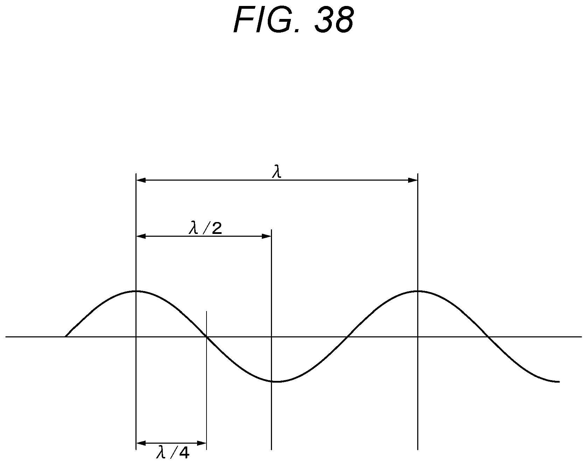

Fig. 38 illustrates a relationship among λ, λ/2, and λ/4. In a case of 160 kHz such as power supply noise, the wavelength λ is 1.87 km, and it is not necessary to particularly consider the length of the distance L. In a case where the frequency of the reception signal is 500 MHz, it is (λ = 60 cm, λ/2 = 30 cm, and λ/4 = 15 cm), and in a case where the frequency of the reception signal is 1 GHz, it is (λ = 30 cm, λ/2 = 15 cm, and λ/4 = 7.5 cm). In a case where the distance L between the antenna unit 1 and the antenna unit 2 is larger than λ/4, the polarities of the signals received by the antenna unit 1 and the antenna unit 2 are different. In this case, the DC-cut capacitor Cc is connected to the antenna unit 1 in the preceding stage such that the rectified DC current does not leak. The capacitance value of the capacitor Cc is determined in consideration of a received frequency, and is, for example, about 1 µF. Moreover, the distance L between the antenna unit 1 and the antenna unit 2 is within λ/4.

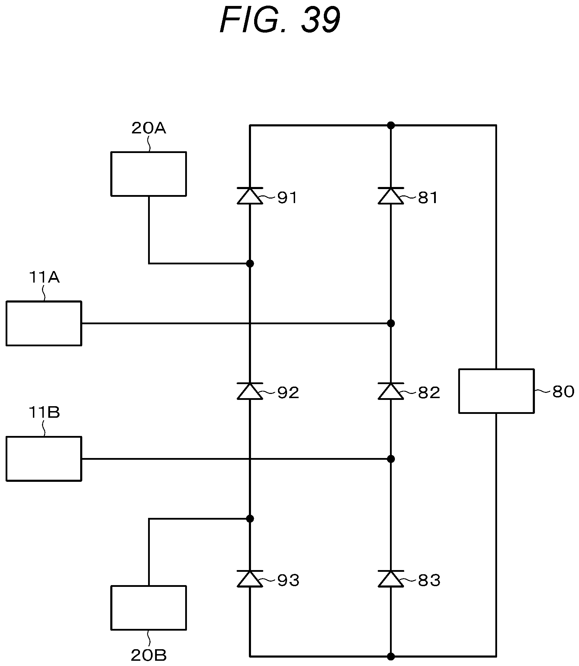

The second embodiment in which the present technology is applied to the above-described second example illustrated in Figs. 30 and 31 will be described with reference to Fig. 39. Note that the Zener diodes 66 and 67 described above are omitted, and the load 80 is connected between the positive and negative output terminals.

In the second embodiment, similarly to the first embodiment, three rectifying diodes 81, 82, and 83 connected in series with the same polarity and three rectifying diodes 91, 92, and 93 connected in series with the same polarity are provided, and two diode series circuits and the load 80 are connected in parallel. A connection point between the anode of the diode 81 and a cathode of the diode 82 is connected to one element 11A of the first antenna element, and a connection point between the anode of the diode 82 and the cathode of the diode 83 is connected to the other element 11B of the first antenna element.

One element 20A of the second antenna element is connected to the connection point between the anode of the diode 91 and the cathode of the diode 92, and the other element 20B of the second antenna element is connected to the connection point between the anode of the diode 92 and the cathode of the diode 93.

In the second embodiment of the present technology illustrated in Fig. 39, the number of diodes can be reduced from eight to six as compared with the configuration illustrated in Fig. 31. By reducing the number of diodes, a forward voltage drop (for example, 0.2 V) generated in the diode can be eliminated, and the performance can be improved.

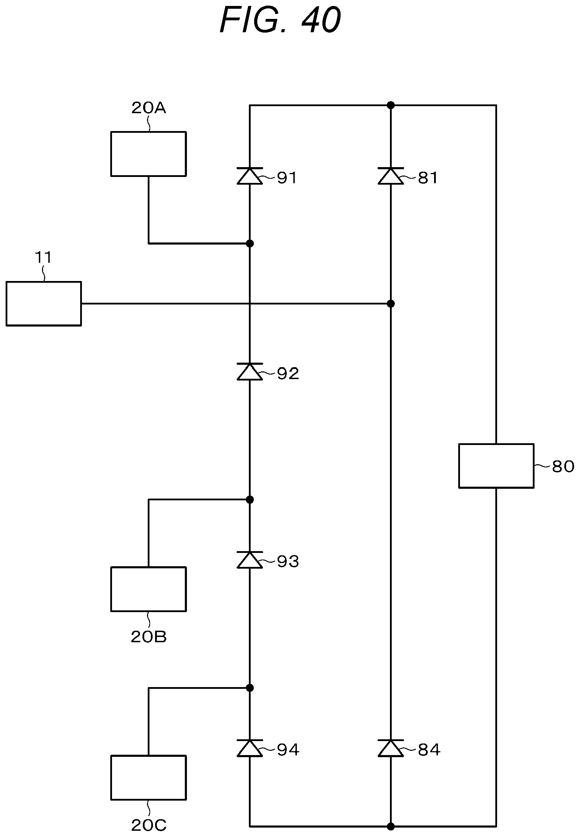

A third embodiment in which the present technology is applied to the above-described second example illustrated in Figs. 31 and 32 will be described with reference to Fig. 40. The third embodiment is an example of (N = 3). Note that the Zener diodes 66 and 67 described above are omitted, and the load 80 is connected between the positive and negative output terminals.

In the third embodiment, since the configuration in which three rectifier circuits are connected in series is replaced, the first diode series circuit includes four diodes. However, the number of diodes is further reduced to connect the diode 81 and the diode 84 in series as illustrated in Fig. 40. The second diode series circuit is configured by a series connection of the diodes 91 to 94. According to the third embodiment, the number of rectifying diodes required can be reduced.

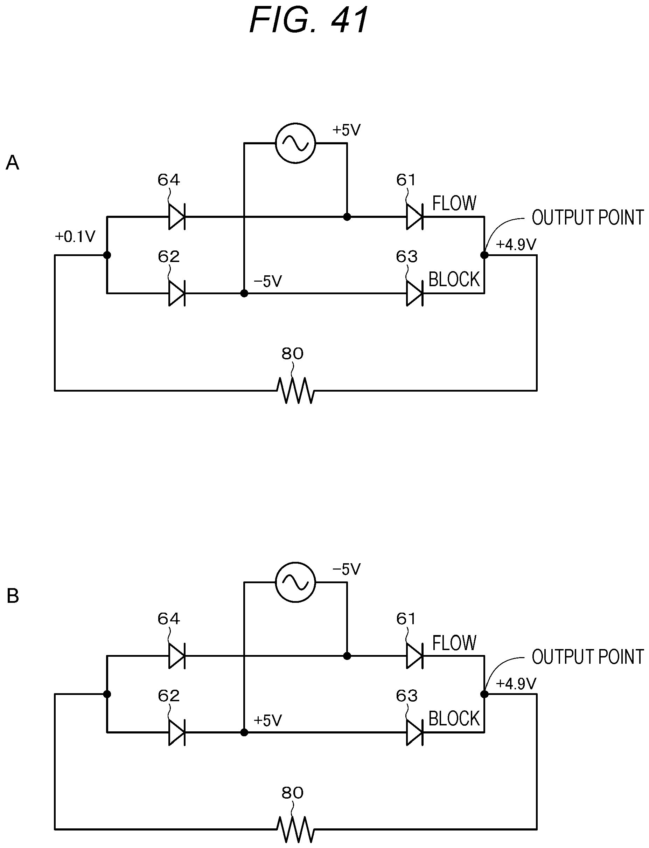

The operation of the rectifier circuit according to the present technology described above will be described. In the present technology, as described with reference to Fig. 7, the full-wave rectifier circuit is used as the rectifier circuit connected to the antenna device from the viewpoint of effective use of energy. As illustrated in Fig. 41, in the full-wave rectifier circuit, a series circuit including the diodes 81 and 84 and a series circuit including the diodes 62 and 63 are connected in parallel using four diodes 81 to 64, and the alternating current is applied to the series circuits to convert the alternating current into a direct current. Note that when the current passes through the diode, a voltage drop occurs according to the flowing current. Therefore, the output voltage at the output point is, for example, 4.9 V decreased by 0.1 V.

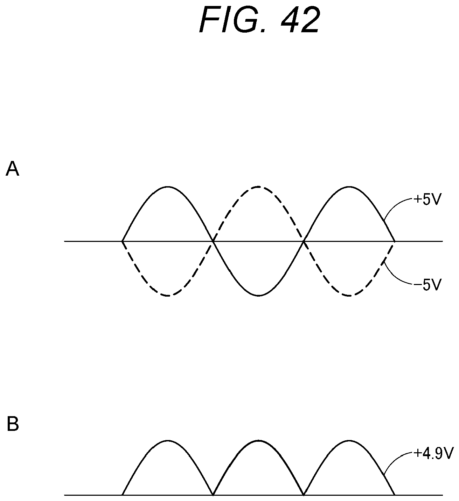

Fig. 41A illustrates a half cycle in which a current flows through the diodes 61 and 62 during the time when the input AC power supply is positive, and the diodes 53 and 64 block the current. Fig. 41B illustrates a half cycle in which a current flows through the diodes 63 and 64 during the time when the input AC power supply is negative, and the diodes 51 and 62 block the current. Therefore, the output illustrated in Fig. 42B is generated from the AC power supply illustrated in Fig. 42A. In Fig. 42A, a solid line is +5.0 and a dotted line is -5.0 V.

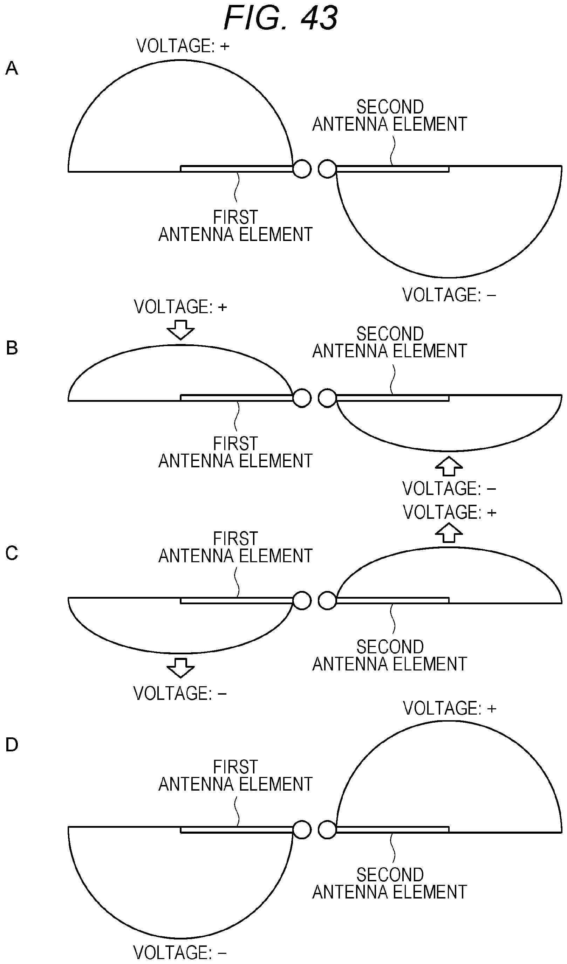

As schematically illustrated in Figs. 43A to 43D, the energy received from the antenna indicates a change in voltage induced between the diodes 61 and 64 and between the diodes 62 and 63 according to the frequency, which changes according to the frequency. That is, when a positive potential is applied to the first antenna element, a negative potential is applied to the second antenna element.

Since only the larger potential passes through the diode, in this example, only the positive potential of 5 V passes through the diode according to the frequency. These are added together in accordance with the frequency to form the direct current. At this time, since the frequency component is still left and there is also a ripple, the frequency component is once stored in the capacitor and then converted into a clean direct current.

In the present technology, not energy having one frequency component but energies having various frequency components are present in an overlapping manner. Therefore, there are not only a case where one type of frequency to be described below is present but also a case where a high voltage and a low voltage are alternately generated depending on the overlapping of the frequencies. However, for simplification of description and illustration, in the drawings, the waveform is represented as a schematic positive and negative waveform similar to a sine wave. For example, a positive voltage value is set to +5 V, and a negative voltage value is set to -5 V.

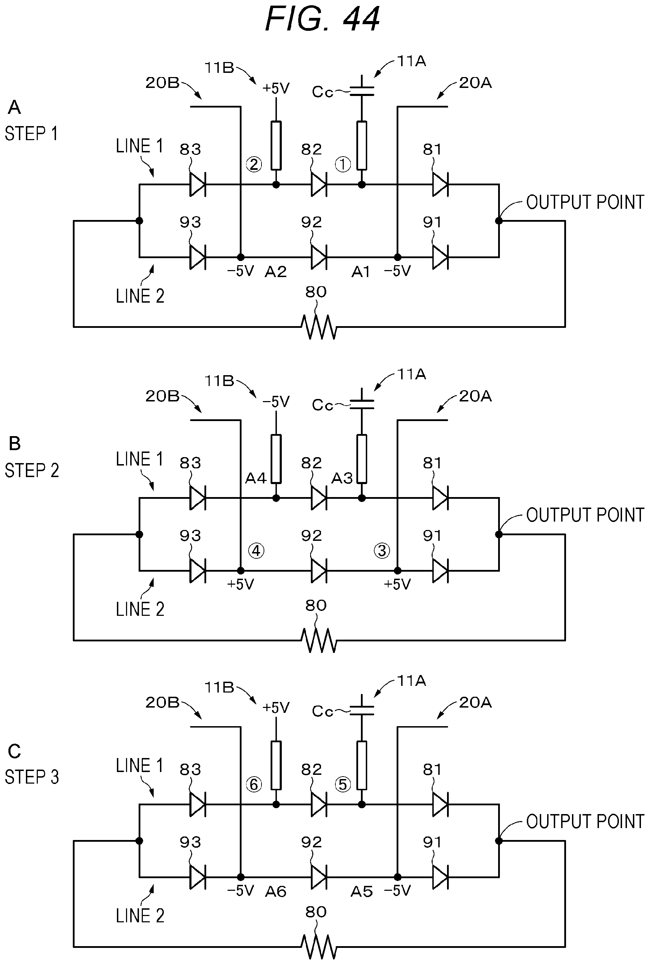

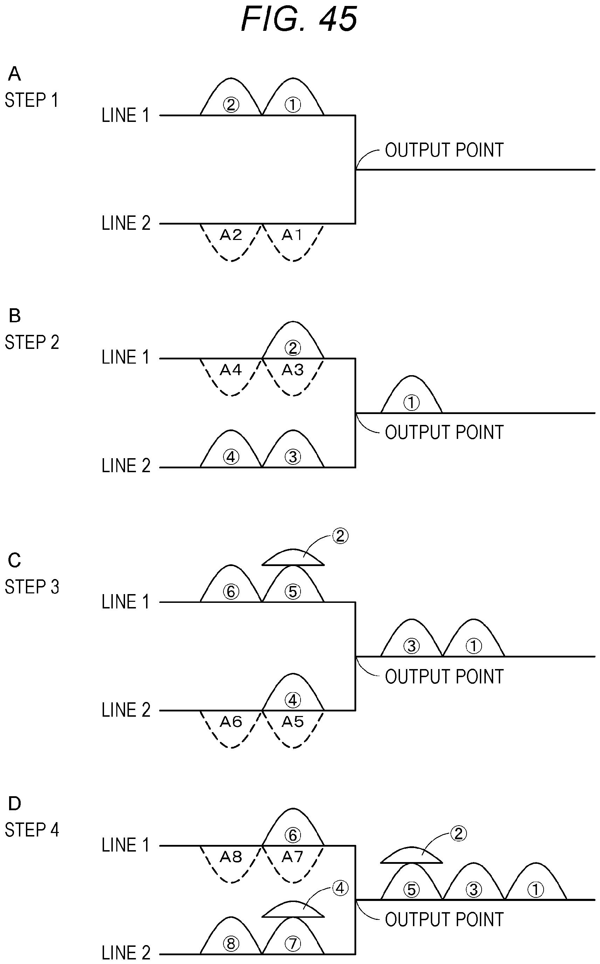

Hereinafter, the operation of the embodiment of the present technology will be described. An embodiment in which six diodes as illustrated in Fig. 36 or Fig. 39 are connected will be described with reference to Figs. 44A, 44B, 44C, 45A, 45B, 45C, and 45D. Note that, in timing charts including Figs. 45A, 45B, 45C, and 45D, the solid line represents + (positive), and the dotted line represents - (negative).

A path in which three diodes 81, 82, and 83 are connected in series is referred to as Line 1, and a path in which three diodes 91, 92, and 93 are connected in series is referred to as Line 2. The antenna element 11A connected to the connection point between the diodes 81 and 82 via the capacitor Cc and the antenna element 11B connected to the connection point between the diodes 82 and 83 are first antenna elements connected to the human body or the metal. The antenna element 20A connected to the connection point between the diodes 91 and 92 and the antenna element 20B connected to the connection point between the diodes 92 and 93 are second antenna elements constituted by a circuit board or the like.

As illustrated in Fig. 44A, when positive voltages (1) and (2) (in the drawings, the positive voltages (1) and (2) are represented by circled numerals. The same applies hereinafter) are induced in the antenna elements 11A and 11B connected to the human body or metal at a certain frequency (step 1), negative voltages A1 and A2 are induced in Line 2 (antenna elements 20A and 20B) as illustrated in Fig. 45A. This is repeated alternately depending on the frequency.

At a next timing (step 2), negative voltages A3 and A4 are induced in the antenna elements 11A and 11B as illustrated in Fig. 44B. As illustrated in Fig. 45B, positive voltages (3) and (4) are induced in Line 2 (antenna elements 20A and 20B). The voltage (1) induced in the antenna element 11A is output to the output point.

At this time, the voltage (2) induced in Line 1 (antenna element 11B) moves to the antenna element 11A side through the diode. At this time, the generated current flows to the human body or metal side as it is unless the capacitor Cc is provided in the antenna element 11A. In order to prevent this, it is necessary to provide the capacitor Cc. Since the antenna elements 20A and 20B are open and the rectified charge does not escape, it is not necessary to provide a capacitor.

At a next timing (step 3), positive voltages (5) and (6) are induced in the antenna elements 11A and 11B as illustrated in Fig. 44C. As illustrated in Fig. 45C, negative voltages A5 and A6 are induced in Line 2 (antenna elements 20A and 20B). The voltage (3) induced in (the antenna element 20A) is output to the output point.

At a next timing (step 4), as illustrated in Fig. 45D, negative voltages A7 and A8 are induced in Line 1 (antenna elements 11A and 11B), and positive voltages (7) and (8) are induced in Line 2 (antenna elements 20A and 20B). The voltage (5)+(2) obtained by adding the voltage (2) to the voltage (5) induced in the antenna element 11A is output to the output point. The voltage (5)+(2) decreases due to the forward voltage drop of the diode and the loss of the capacitor Cc, but the voltage can be greatly increased as compared with that in the configuration of the full-wave rectifier circuit including two antenna elements and four diodes.

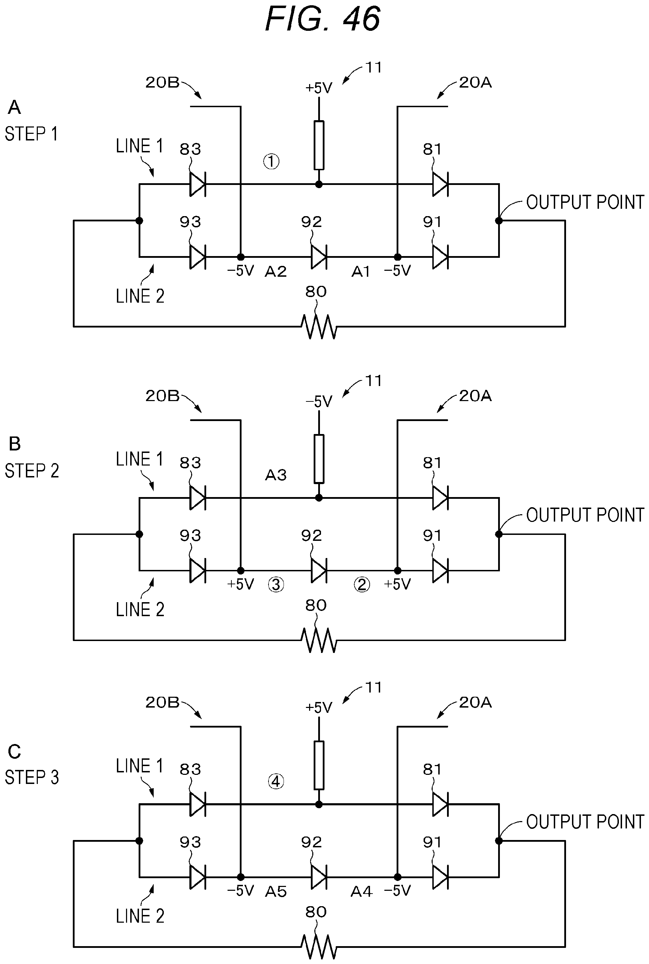

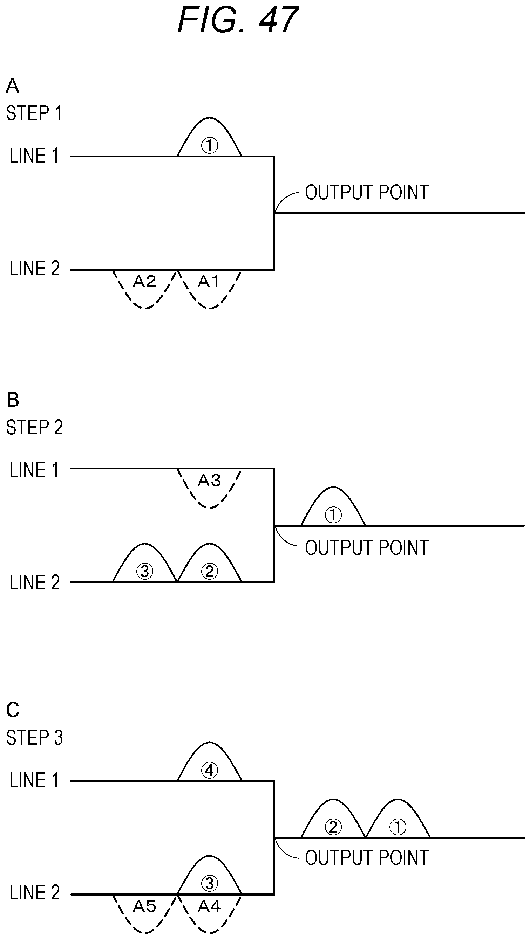

Figs. 46A, 46B, and 46C illustrate a rectifier circuit including a series connection (Line 1) between the diodes 81 and 83 and a series connection (Line 2) among diodes 91, 92, and 93 and including a total of five diodes. As illustrated in Figs. 46A and 47A, when the positive voltage (1) is induced in Line 1 (antenna element 11) connected to the human body or metal at a certain frequency, the negative voltages A1 and A2 are induced in Line 2 (antenna elements 20A and 20B).

At a next timing (step 2), as illustrated in Figs. 46B and 47B, the negative voltage A3 is induced in Line 1 (antenna element 11), and the positive voltages (2) and (3) are induced in Line 2 (antenna elements 20A and 20B). The voltage (1) induced in the antenna element 1 is output to the output point.

At a next timing (step 3), as illustrated in Figs. 46C and 47C, the positive voltage (4) is induced in Line 1 (antenna element 11), and the negative voltages A4 and A5 are induced in Line 2 (antenna elements 20A and 20B). The voltage (2) induced in Line 2 (antenna element 20A) is output to the output point.

At this time, the voltage (3) induced in Line 2 (antenna element 20B) moves to the antenna element 20A side through the diode 92. In the example in which a total of six diodes are provided, the capacitor Cc is provided, but in this case, the size of the antenna element 20A may be small, and the operation is performed without providing the capacitor Cc.

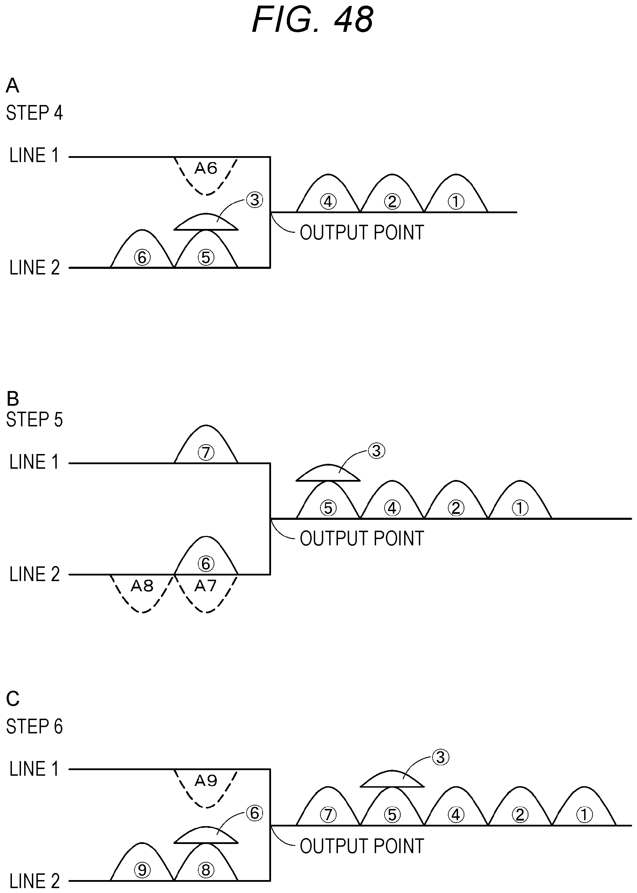

At a next timing (step 4), as illustrated in Fig. 48A, the negative voltage A6 is induced in Line 1 (antenna element 11), and the positive voltages (5) and (6) are induced in Line 2 (antenna elements 20A and 20B). The voltage (4) induced in Line 1 (antenna element 11) is output to the output point. The voltage (3) is added to the voltage (5) induced in Line 2 (antenna element 20A). This occurs in step 5 which is a subsequent timing after this.

At next timing (step 5), as illustrated in Fig. 48B, the positive voltage (7) is induced in Line 1 (antenna element 11), and the negative voltages A7 and A8 are induced in Line 2 (antenna elements 20A and 20B). The voltage (5)+(3) obtained by adding the voltage (3) to the voltage (5) induced in Line 2 (antenna element 20A) is output. The voltage (5) + (3) decreases due to the forward voltage drop of the diode, but the voltage can be greatly increased as compared with that in the configuration of the full-wave rectifier circuit including two antenna elements and four diodes. At this time, the voltage (6) induced in Line 2 (antenna element 20B) moves to the antenna element 20A side through the diode 92.

At a next timing (step 6), as illustrated in Fig. 48C, the negative voltage A9 is induced in Line 1 (antenna element 11), and the positive voltages (8) and (9) are induced in Line 2 (antenna elements 20A and 20B). The voltage (7) induced in Line 1 (antenna element 11) is output to the output point. The voltage (6) is added to the voltage (8) induced in Line 2 (antenna element 20A). This occurs at a subsequent timing after this. Hereinafter, the above-described operation is repeated.

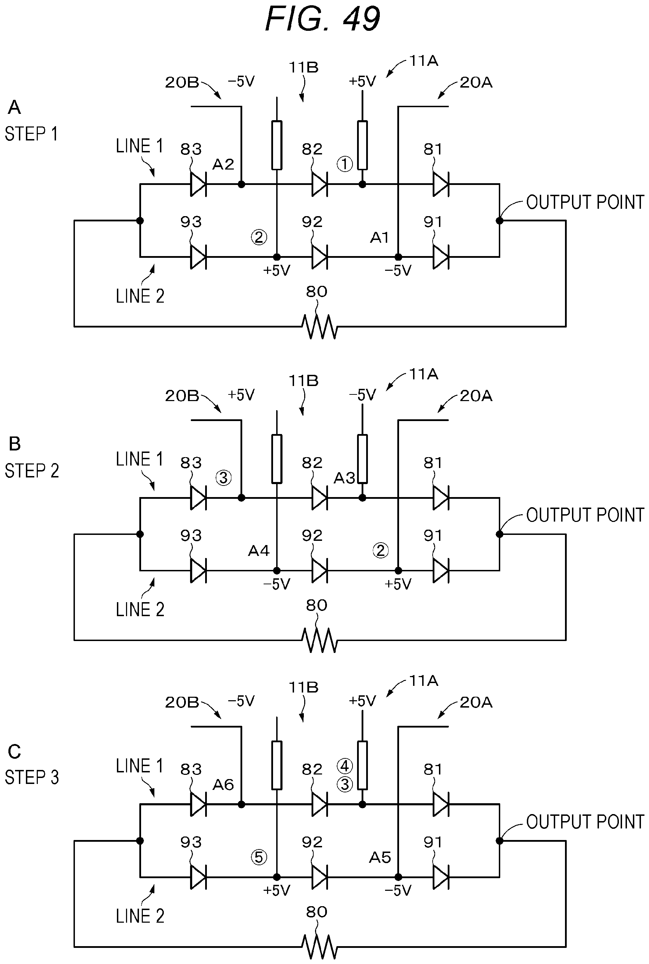

In the configuration described above, the first antenna elements 11A and 11B are connected to Line 1, and the second antenna elements 20A and 20B are connected to Line 2. That is, voltages having the same polarity are applied to the lines. However, as illustrated in an example in Fig. 49, voltages having different polarities may be applied to Line 1 and Line 2 at a certain frequency. With such a configuration, it is possible to omit the capacitor required in the embodiments so far.

Figs. 49A, 49B, and 49C illustrate a circuit configuration in which three diodes 81, 82, and 83 are connected in series to Line 1 and three diodes 91, 92, and 93 are connected in series to Line 2 as in the example of Fig. 44. The antenna element 11A connected to the human body or metal is connected to a connection point between the diodes 81 and 82, and the antenna element 20A is connected to a connection point between the diodes 91 and 92. The antenna element 11B connected to the human body or metal is connected to a connection point between the diodes 92 and 93, and the antenna element 20B is connected to a connection point between the diodes 82 and 83.

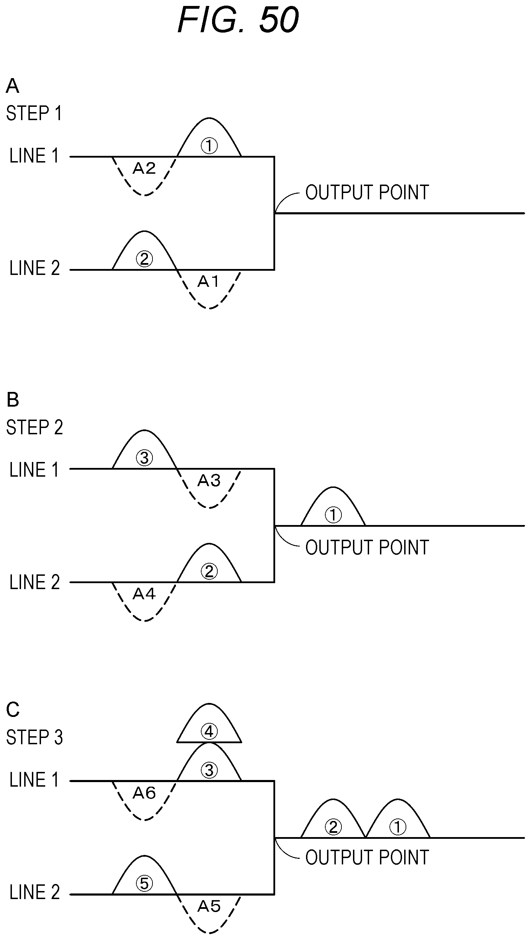

At a certain timing (step 1), as illustrated in Figs. 49A and 50A, when the positive voltages (1) and (2) are induced in Line 1 (antenna elements 11A and 11B), the negative voltages A1 and A2 are induced in Line 2 (antenna elements 20A and 20B).

At a next timing (step 2), as illustrated in Figs. 49B and 50B, the negative voltages A3 and A4 are induced in Line 1 (antenna elements 11A and 11B), and the positive voltages (2) and (3) are induced in Line 2 (antenna elements 20A and 20B). The voltage (1) induced in the antenna element 1A is output to the output point.

At a next timing (step 3), as illustrated in Figs. 49C and 50C, the positive voltages (4) and (5) are induced in Line 1 (antenna elements 11A and 11B), and the negative voltages A5 and A6 are induced in Line 2 (antenna elements 20A and 20B). The voltage (2) induced in the antenna element 20A is output to the output point. At this time, the voltage (3) induced in the antenna element 20B moves to the antenna element 11A side through the diode 82.

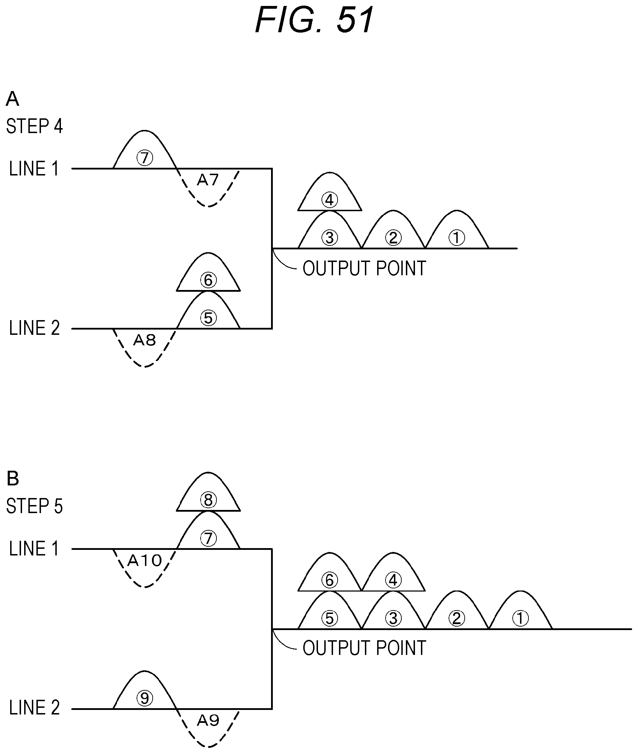

At a next timing (step 4), as illustrated in Fig. 51A, the negative voltages A7 and A8 are induced in Line 1 (antenna elements 11A and 11B), and the positive voltages (6) and (7) are induced in Line 2 (antenna elements 20A and 20B). The voltage (4) induced in the antenna element 11A is output to the output point. The voltage (5) is added to the voltage (6) induced in the antenna element 20A. This occurs in step 5 which is a subsequent timing after this.

At a next timing (step 5), as illustrated in Fig. 51B, the positive voltages (8) and (9) are induced in Line 1 (antenna elements 11A and 11B), and the negative voltages A9 and A10 are induced in Line 2 (antenna elements 20A and 20B). The voltage (6)+(5) obtained by adding the voltage (5) to the voltage (6) induced in the antenna element 20A is output to the output point. The voltage (6)+(5) decreases due to the forward voltage drop of the diode, but the voltage can be greatly increased as compared with that in the configuration of the full-wave rectifier circuit including two antenna elements and four diodes. Hereinafter, the above-described operation is repeated.

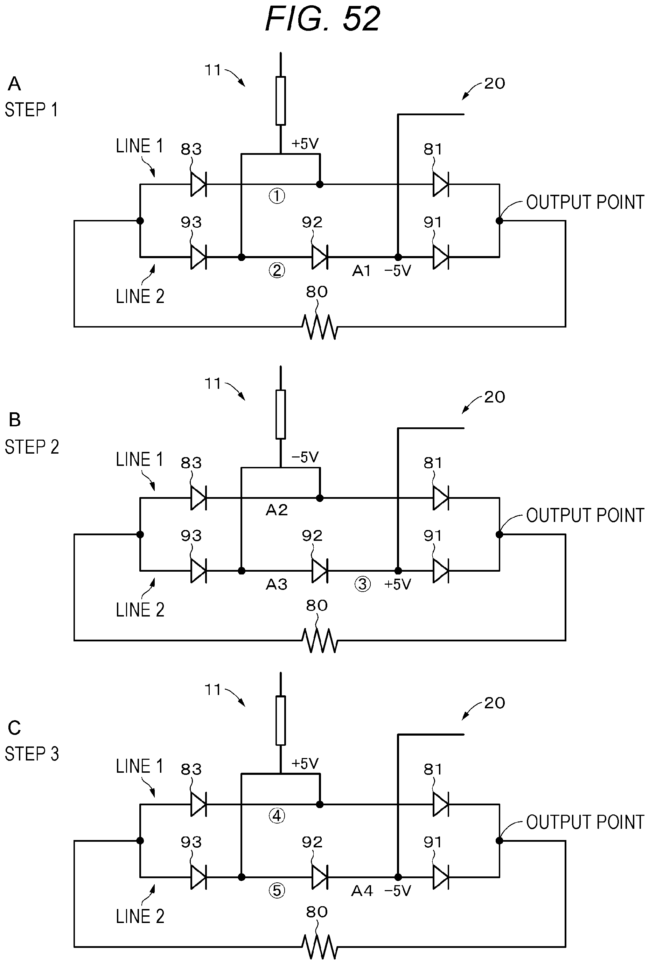

Figs. 52A, 52B, and 52C are examples in which voltages having different polarities are applied to Line 1 and Line 2 at a certain frequency in the configuration including five diodes illustrated in Figs. 46A, 46B, and 46C. The antenna element 11 connected to the human body or metal is connected to a connection point between the diodes 81 and 83 and a connection point between the diodes 92 and 93, and the antenna element 20 configured differently is connected to a connection point between the diodes 91 and 92.

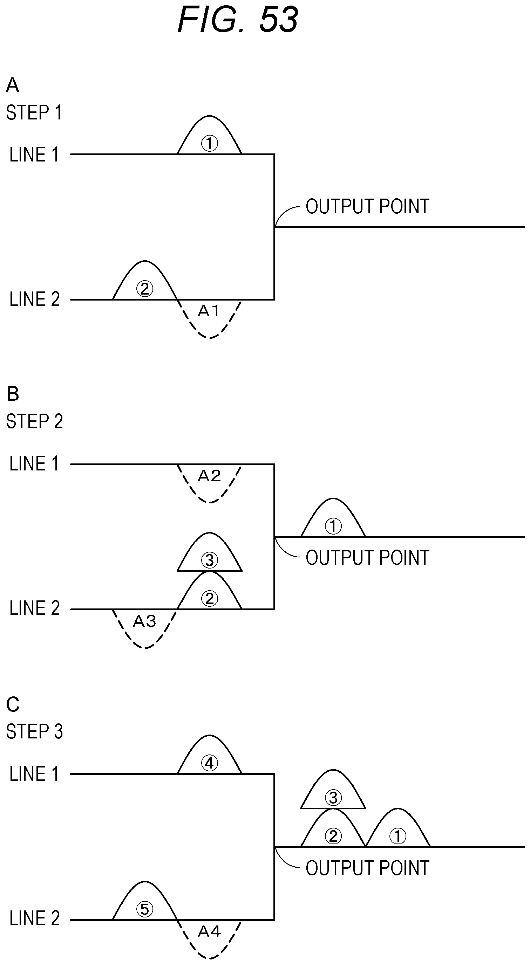

At a certain timing (step 1), as illustrated in Figs. 52A and 53A, when the positive voltages (1) and (2) are induced in the antenna element 11, the negative voltage A1 is induced in the antenna elements 20.

At a next timing (step 2), as illustrated in Figs. 52B and 53B, the negative voltages A2 and A3 are induced in the antenna element 11, and the positive voltage (3) is induced in the antenna element 20. The voltage (1) induced in the antenna element 11 is output to the output point. At this time, the voltage (2) induced in the antenna element 11 moves to the antenna element 20 side through the diode 92. The voltage (2) is added to the voltage (3) induced in the antenna element 20. This occurs in step 3 which is a subsequent timing after this.

At a next timing (step 3), as illustrated in Figs. 52C and 53C, the positive voltages (4) and (5) are induced in the antenna element 11, and the negative voltage A4 is induced in the antenna element 20. The voltage (3)+(2) obtained by adding the voltage (2) to the voltage (3) induced in the antenna element 20 is output to the output point. The voltage (3)+(2) decreases due to the forward voltage drop of the diode, but the voltage can be greatly increased as compared with that in the configuration of the full-wave rectifier circuit including two antenna elements and four diodes.

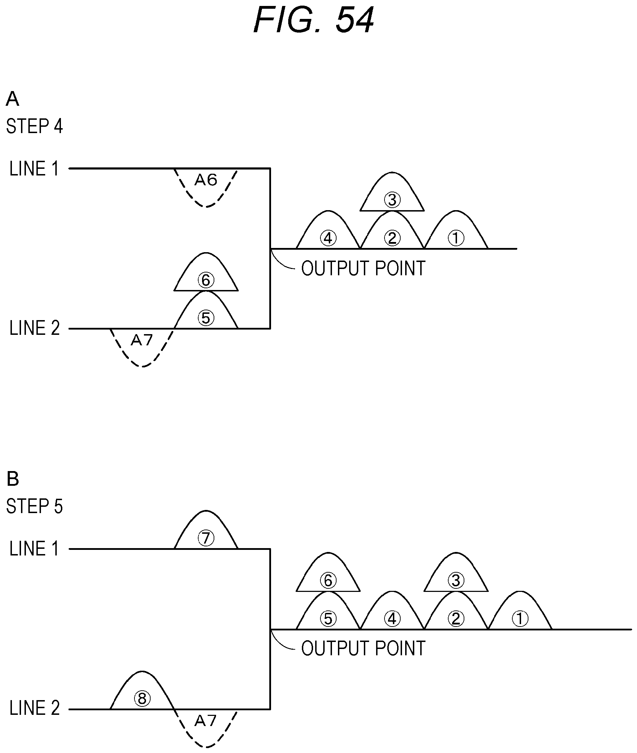

At a next timing (step 4), as illustrated in Fig. 54A, the negative voltages A6 and A7 are induced in the antenna element 11, and the positive voltage (6) is induced in the antenna element 20. The voltage (4) induced in the antenna element 11 is output to the output point. At this time, the voltage (5) induced in the antenna element 11 moves to the antenna element 20 side through the diode 92. The voltage (5) is added to the voltage (6) induced in the antenna element 20. This occurs in step 5 which is a subsequent timing after this.

At a next timing (step 5), as illustrated in Fig. 54B, the positive voltages (7) and (8) are induced in the antenna element 11, and the negative voltage A7 is induced in the antenna element 20. The voltage (6)+(5) obtained by adding the voltage (5) to the voltage (6) induced in the antenna element 20 is output to the output point. The voltage (6)+(5) decreases due to the forward voltage drop of the diode, but the voltage can be greatly increased as compared with that in the configuration of the full-wave rectifier circuit including two antenna elements and four diodes. Hereinafter, the above-described operation is repeated.

By alternately connecting the antenna elements to Line 1 and Line 2 in this manner, the induced voltages can be alternately applied to the lines. Furthermore, by adopting this configuration, as illustrated in Fig. 52, the number of antenna elements configured on the board side can be reduced.

The embodiment of the present technology described above describes a circuit that efficiently converts energies having AC voltages at various frequencies into a DC current to increase the voltages, and stores the voltages. However, since the circuit greatly depends on characteristics of a device that extracts energy, it is important to appropriately select and use the circuit according to each device.

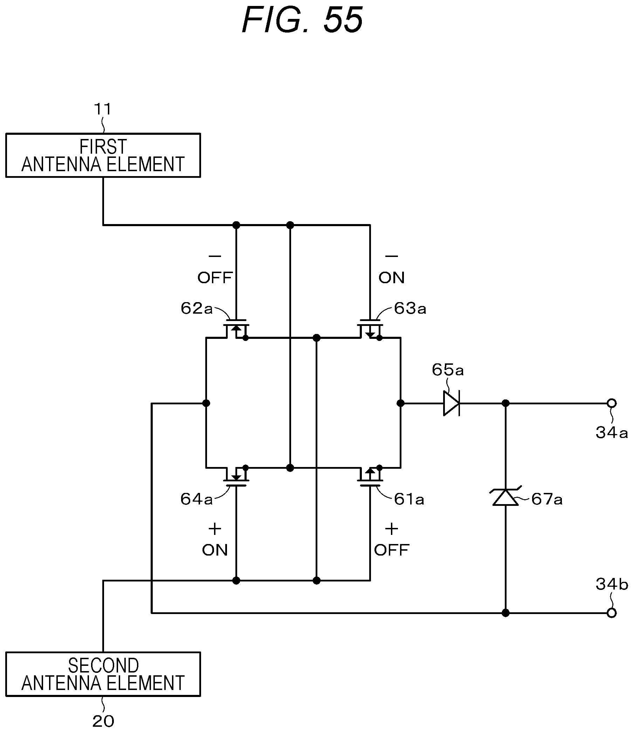

As the rectifier circuit 2 connected to the antenna device 1, in addition to the configuration of the full-wave rectifier circuit using the diode illustrated in Fig. 7, as illustrated in Fig. 55, a rectifier circuit using a metal oxide semiconductor (MOS) field effect transistor (FET) instead of the diode as a switching element can be used. That is, a rectifier circuit includes four FETs 61a, 62a, 63a, and 64a, a backflow prevention diode 65a, and an FET protection Zener diode 67a.

The FETs 61a and 63a are P-channel depletion MOSFETs, and when a negative voltage is applied to a gate, a current flows from a drain to a source. The FETs 62a and 64a are N-channel depletion MOSFETs, and when a positive voltage is applied to a gate, a current flows from a drain to a source.

The drain of the FET 61a and the drain of the FET 64a are connected to each other, and the drain of the FET 62a and the drain of the FET 63a are connected to each other. The gates of the FETs 62a and 63a and a connection point between the drain of the FET 61a and the drain of the FT 64a are connected to the antenna element 11. The gates of the FETs 61a and 64a and a connection point between the drain of the FET 62a and the drain of the FET 63a are connected to the antenna element 20.

As illustrated in Fig. 55, in a phase in which the antenna element 11 side is negative and the antenna element 20 side is positive, the FET 62a is turned off, the FET 63a is turned on, the FET 61a is turned off, and the FET 64a is turned on.

A connection point between the source of the FET 61a and the source of the FET 63a is connected to one output terminal 34a via the backflow prevention diode 65a. A connection point between the source of the FET 62a and the source the FET 64a is connected to the other output terminal 34b. The FET protection Zener diode 67a is connected between the output terminal 34a and the output terminal 34b. Four FETs 61a, 62a, 63a, and 64a may be configured to be discrete or as a dedicated IC.

In the rectifier circuit using the FET, conduction types (N channel/P channel) of the FETs may be switched. The rectifier circuit using the FET can be used instead of the rectifier circuit using the diode described above, and the same effects as those of the embodiment and the modification examples thereof can be obtained. In particular, in a case where the frequency to be harvested is a low frequency of 50 Hz, since the conversion efficiency of the element is better in the FET than in the diode, the FET may be used depending on the device frequency to be harvested.

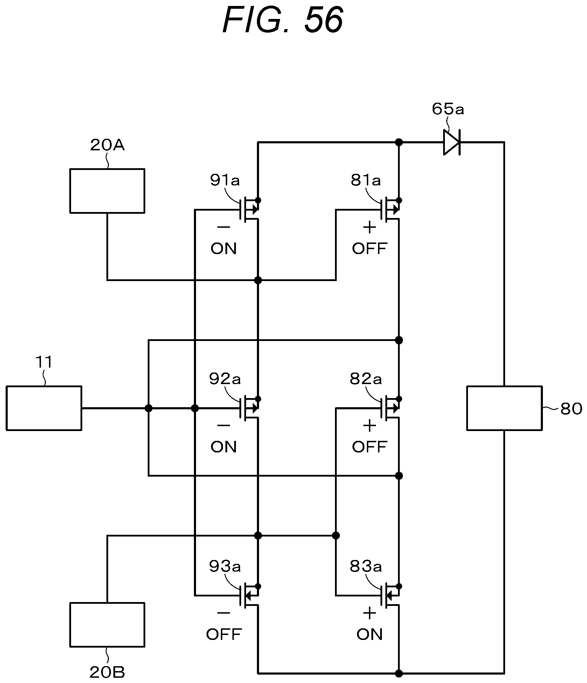

Fig. 56 illustrates an example in which a circuit similar to that in Fig. 33 described above is configured by the rectifier circuit using the FET. A P-type FET 81a, a P-type FET 82a, and an N-type FET 83a respectively corresponding to the diodes 81, 82, and 83 are provided, and a P-type FET 91a, a P-type FET 92a, and an N-type FET 93a respectively corresponding to the diodes 91, 92, and 93 are provided.

The connection point between the source of the FET 81a and the source of the FET 91a is connected to one end of the load 80 via the backflow prevention diode 65a, and the connection point between the source of the FET 83a and the source of the FET 93a is connected to the other end of the load 80. The gate of the FET 81a is connected to the antenna element 20A, and the gate of the FET 82a and the gate of the FET 83a are connected to the antenna element 20B. The gate of the FET 91a, the gate of the FET 92a, and the gate of the FET 93a are connected to the antenna element 11. When the antenna element 11 is - (negative) and the antenna elements 20A and 20B are + (positive), each FET is in an ON/OFF state illustrated in Fig. 56.

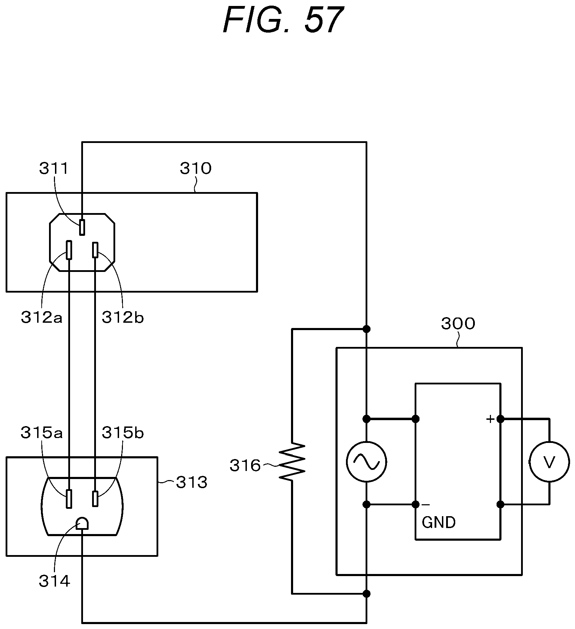

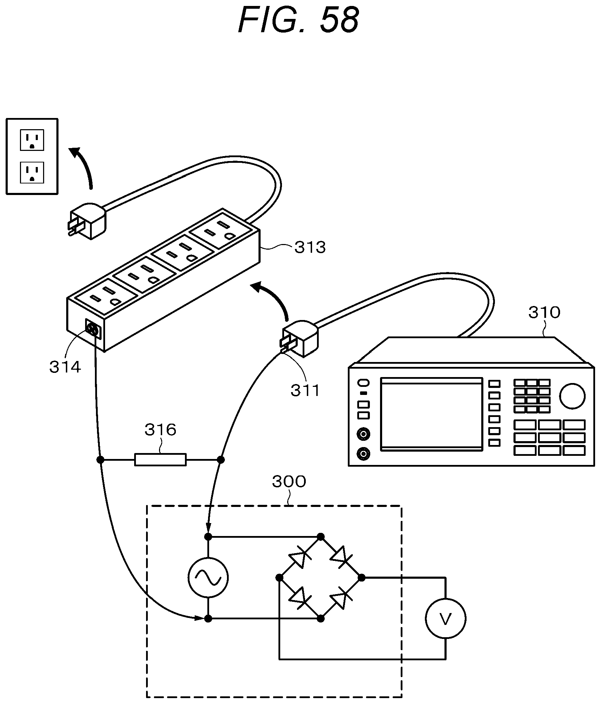

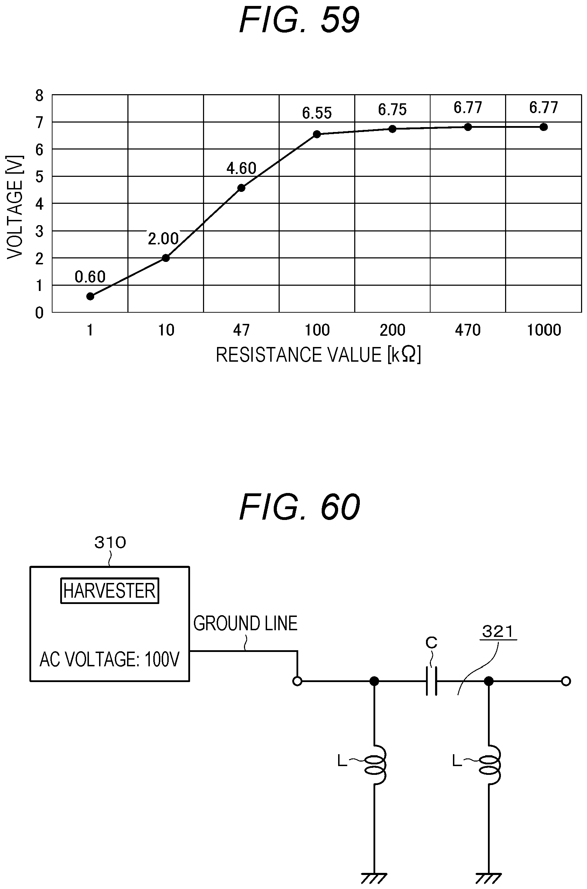

Figs. 57 and 58 is schematic diagrams illustrating a measurement device for measuring a relationship between output of a harvester (power generator) 300 and a ground resistance. Fig. 59 is a graph illustrating a relationship between the output of the harvester 300 and the ground resistance. In the measurement device illustrated in Figs. 57 and 58, the harvester 300 (see Fig. 7) for a test is connected between a ground terminal 311 of a device 310 (here, a measurement device driven at 100 V AC) and the GND (ground) 314 provided on the socket of a power tap 313. A resistance element 316 is connected between input terminals of the harvester 300. The harvester 300 has the device 310 as one antenna element and the power tap 313 as the other antenna element.

One input terminal of the harvester 300 is connected to the ground terminal 311 of the device 310, and the other input terminal is connected to the GND 314. Note that output terminals 315a and 315b of the power tap 313 are connected to three power supply terminals 312a and 312b provided in the device 310, respectively, and 100 V AC is supplied thereto. The resistance element 316 is connected between the input terminals of the harvester 300. The resistance element 316 is an element such as a wire wound resistor in which a predetermined DC resistance value is set. The resistance element 316 functions as a ground resistor that connects the device 310 and the GND 314. For example, in a case where the resistance element 316 is sufficiently large, the device 310 is substantially in a floating state with respect to the GND 314.

In the measurement device illustrated in Figs. 57 and 58, the output voltage (voltage between the output terminals) of the harvester 300 is measured by changing the DC resistance value of the resistance element 316. The graph illustrated in Fig. 59 shows an output voltage [V] detected by the harvester 300 in a case where the DC resistance value [Ω] of the resistance element 316 serving as the ground resistor is changed. For example, in a case where the DC resistance value is 1 kQ, which is relatively low, the detection voltage is 0.60 V. Furthermore, in a case where the DC resistance value is 10 kQ, a voltage of 2.00 V is detected, and in a case where the DC resistance value is 47 kQ, 4.60 V is detected. As described above, the ground of the device 310 serving as one antenna element approaches a floating state with respect to the GND 314, which is the ground of the earth, and the detection voltage is higher as the DC resistance value is higher.

Moreover, when the DC resistance value is increased, for example, the detection voltage becomes 6.55 V at the time point when the DC resistance value is 100 kQ. This is substantially the same as the value (6.77 V) in a state where the resistance element 316 is removed and the ground of the device 310 is completely floated. That is, by inserting the resistance element 316 having a DC resistance of about 100 kQ, one antenna element is substantially in a floating state with respect to the ground, and the harvester 300 induces a voltage. Note that even when the DC resistance is in a range of 100 kQ or less, for example, when the resistance value is 10 kQ or more, a voltage of 2.00 V or more can be induced, and the resistance value can be selected depending on the intended use.

In Figs. 57, 58, and 59, the DC resistance component of the ground resistance is described. On the other hand, the electric field energy taken in by the harvester 300 is mainly energy of an AC signal. Therefore, for example, when the resistance (impedance) to the AC signal of the target frequency is sufficiently large, it is possible to cause the ground of the device 310 to be close to a floating state at the frequency, and it is possible to induce a high voltage. Specifically, an inductance of a coil can be used.

For example, in a case of being connected to an AC power supply of 50 Hz (or 60 Hz), an AC signal of 50 (or 60 Hz) is considered to be a main source of the electric field energy. Therefore, for example, in a case where the impedance at 50 Hz (or 60 Hz) is 10 kQ or more, the ground of the device 310 is substantially in a floating state as described above, and the energy can be efficiently taken in.

However, depending on the device 310 connected to the harvester 300, in order to prevent electric shock to the human body, grounding to the earth ground may be defined as a measure against electric leakage according to safety standards. In this case, all the energies induced in the device 310 escapes to the ground, and no voltage is induced.

Referring to the current safety standards in Japan, an example of the device to which the harvester 300 is applied includes a device for which a D-class grounding work (hereinafter, referred to as D grounding) is required. The D grounding is a grounding work performed on a low-voltage mechanical tool using 300 V or less, a metal outer box, and a metal pipe. For example, D grounding is performed for a device that needs to be grounded among devices used by being connected to a 100 V AC power supply. As an example, the grounding of the devices such as a microwave oven, a refrigerator, a washing machine, a laundry dryer, an air conditioner, a dehumidifier, various measurement devices, a factory robot, and a server device conforms to this standard. As described above, in a case where a general device is used, the D grounding is used as a reference.

Hereinafter, it is assumed that the D grounding is performed for a device to which the harvester 300 is applied. In the D grounding, a ground resistance in which a DC resistance is 100 Ω or less is required. Note that in a case where a device that automatically cuts off the electric path within 0.5 seconds in a case where a ground fault (electric leakage) occurs is provided in the low-voltage electric path, a ground resistance having a DC resistance of 500 Ω or less may be used. For example, in a case where there is a mechanism for cutting off power supplied to the device when a dark current is detected, the ground resistance may be changed from 100 Ω to 500 Ω in the D grounding.

In order to solve this problem and induce the electric field energy in the harvester 300, it is desirable to realize a low resistance value that indicates a high impedance at the frequency of the AC signal induced in the device 310 and satisfies the safety standards in the direct current. In the case of harvesting the electric field energy of 100 MHz or more which is a high frequency to some extent, it is possible to separate the frequency of the direct current and the frequency of the AC signal to be harvested from each other by using the inductance of only the coil inserted between the ground line and the harvester 300, and to configure high impedance (100 kQ or more) at the frequency of the AC signal to be harvested.

However, in a case of being connected to the low AC power supply of 50 Hz (or 60 Hz), the AC signal of 50 Hz (or 60 Hz) may be considered to be a main source of the electric field energy. In such a case, the inductance of only the coil has a very large value, and it is difficult to create a floating state in the space only by using the coil. That is, the inductance value is several 100 Henry, which is not realistic.

In order to realize a state where the device 310 floats with such an AC signal of 50 Hz (or 60 Hz), a high-pass filter 321 (Chebyshev high-pass filter) as illustrated in Fig. 60 is considered. The output terminal of the high-pass filter 321 is open. Since the coil is included in the preceding stage of the filter, a high impedance (100 kQ or more) can be realized in the AC signal of 50 Hz (or 60 Hz) by setting the DC resistance value of the coil of this portion so as to satisfy the safety standards. Thus, the inductance of the coil can be reduced even at a low frequency, and miniaturization can be realized. For example, in the case of configuring this filter at 50 Hz, the DC resistance of the coil is 22 Ω with the coil of 22 mH and the capacitor of 470 µF.

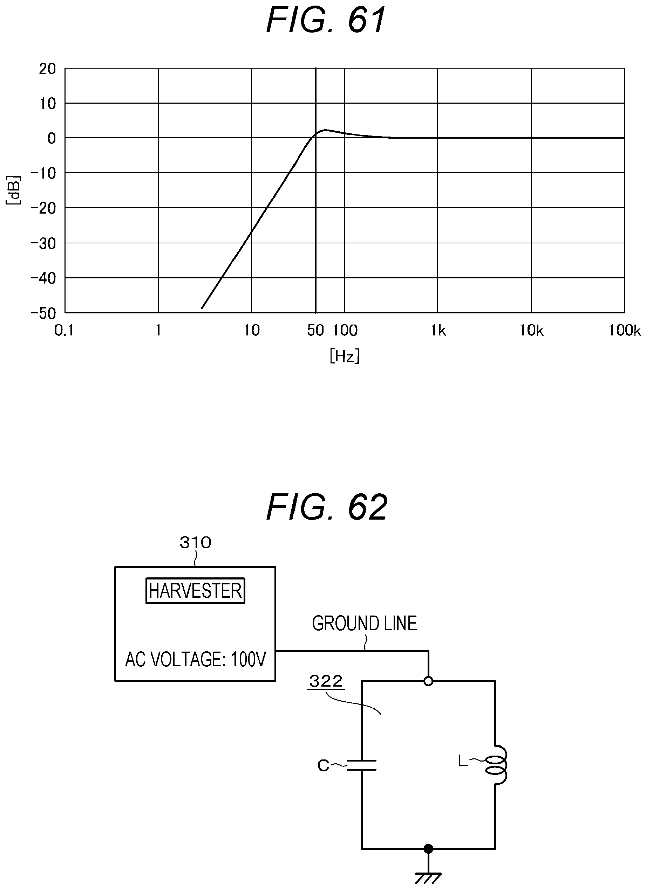

The frequency characteristics of the high-pass filter 321 are as illustrated in Fig. 61. The capacitance of the capacitor has a frequency component, and decreases at a frequency of 1 kHz or more even when the capacitance shows a high value at 50 Hz (or 60 Hz). Thus, in a case where more frequency components are induced in the device 310 as electric field energy, when it is desired to harvest the energy, it cannot be harvested only by the high-pass filter 321.

In order to solve such a problem, as illustrated in Fig. 62, a frequency component of the electric field energy induced in the device 310 is measured in advance, and a parallel resonance circuit 322 having a high impedance with the ground at the frequency can be configured between the ground line and the ground.

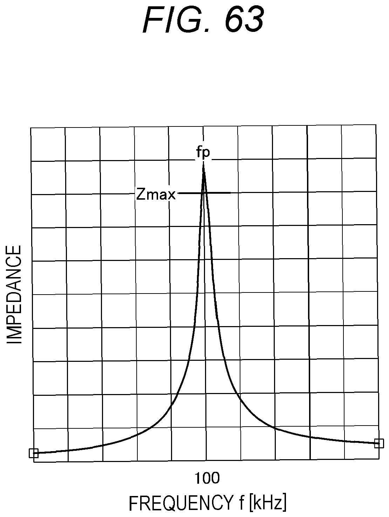

Since the parallel resonance circuit 322 has a configuration in which a coil and a capacitor are inserted in parallel, the parallel resonance circuit 322 has a high impedance at the frequency of the electric field energy induced in the device 310 and desired to be harvested, and has the DC resistance of the coil in the direct current. Therefore, the parallel resonance circuit 322 can be configured so as to satisfy the safety standards. For example, as illustrated in Fig. 63, in a case where the parallel resonance circuit 322 having characteristics that the impedance is maximized at 100 kHz is configured, the DC resistance of the coil is 0.04 Ω with the coil of 10 mH and the capacitor of 0.5 µF. The parallel resonance circuit 322 desirably includes an electrolytic capacitor since the frequency range in which the impedance is high is widened as a Q value is higher.

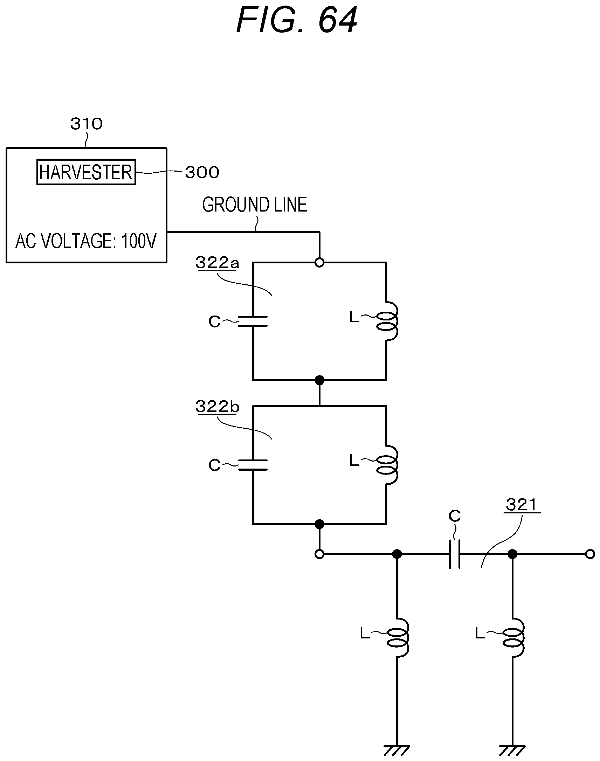

By combining the high-pass filter 321 and the parallel resonance circuit 322 (at least one or more), it is possible to take in electric field energy in accordance with various frequency components induced in the device 310 while satisfying the safety standards for performing D-grounding of the device 310 with the ground line. The high-pass filter 321 and the parallel resonance circuit 322 may be used alone in accordance with the frequency component of the electric field energy generated in the device 310, or may be used in combination as appropriate in accordance with the frequency to be harvested so as to satisfy the resistance value in the safety standards. Fig. 64 illustrates an example in which parallel resonance circuits 322a and 322b and the high-pass filter 321 are combined.

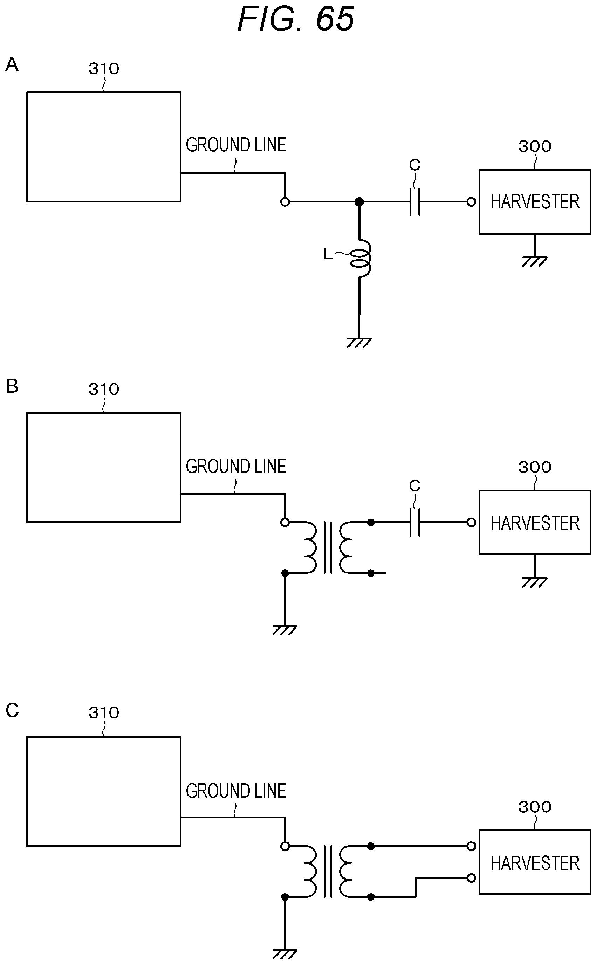

Although the filter causing the device 310 to be in a floating state in accordance with the frequency to be harvested has been described so far, the first antenna element of the harvester 300 can be connected to the output terminal (open) of the high-pass filter of the filter in the middle of the ground, and the second antenna element can be configured by the ground (see Fig. 65A) or an antenna such as a meander line of copper foil on a substrate. For example, in the case of a three-terminal outlet illustrated in Fig. 58 in which there is a GND line in a factory, since the harvester 300 can be configured in a plug portion of the device 310, it is possible to harvest energy from the entire device 310 by using the GND of the device 310 as an antenna element.

In the configuration of Fig. 65A, the high-pass filter is connected, but a transformer may be connected as illustrated in Fig. 65B or 65C. Since the harvester 300 and the device 310 are completely separated from each other by the transformer, it is possible to prevent a large amount of current from flowing through the harvester 300 at the time of electric leakage, and it is possible to enhance the safety. In this example, the configuration using the high-pass filter and the transformer has been described, but the configuration can be replaced with the parallel resonance circuit and the electric leakage filter such as the inductor, which have been described above.

A device that does not need to be grounded by connecting a commercial AC power supply, for example, a product such as a television, a hard disk recorder, a game device, or an audio device, is a device floating from the ground. Furthermore, a drone and a vehicle are used with a ground of the earth and a certain resistance. In order to efficiently harvest power by using these devices, for example, it is necessary to separate GND of a power supply board using an inverter circuit that generates large power and other metal portions of the device. From the above-described experimental results, it can be seen that when the resistance value for separation is 10 kQ or more, an antenna element 1 and an antenna element 2 can be separated to harvest power.

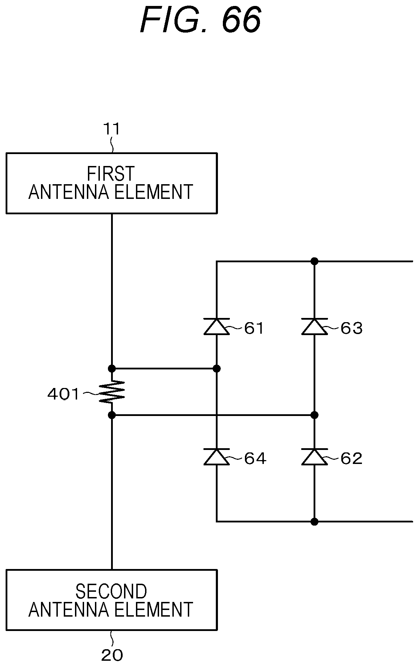

That is, as illustrated in Fig. 66, when the GND of the power supply board using the inverter circuit that generates large power is set as a first antenna element 11 and the other metal portion of the device is set as a second antenna element 20, the power can be harvested from the harvester by inserting and separating a resistor 401 of 10 kQ or more between the antenna elements. By separating in advance inside the device in this manner, it is possible to harvest a large amount of power as compared with an arrangement in which the harvester is placed outside and the harvester and the device are connected and used.

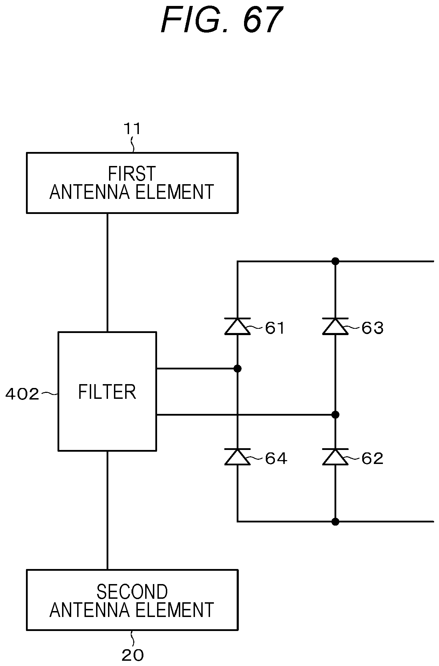

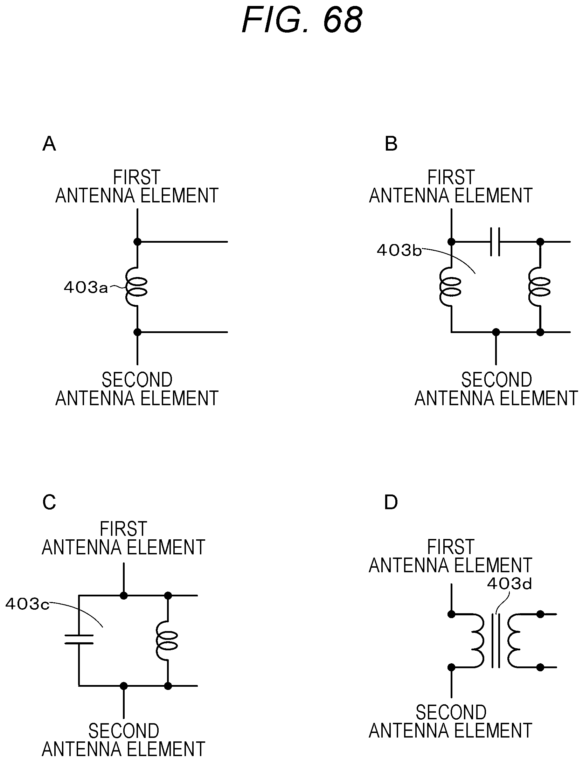

Moreover, as illustrated in Fig. 67, by connecting a filter 402 instead of the separation resistor, a significantly low resistance can be realized in the direct current, and the resistance value can be increased according to the frequency of the power to be harvested. Specific examples of the filter 402 include an inductor 403a (Fig. 68A), a high-pass filter 403b (Fig. 68B), a parallel resonance circuit 403c (Fig. 68C), and a transformer 403d (Fig. 68D) in accordance with the frequency of the power to be harvested. By connecting the filter 402, a significantly low resistance can be realized in the direct current, and the resistance value can be increased according to the frequency of the power to be harvested. In particular, in a case where the transformer 403d is used, it is completely separated from the device in terms of a direct current, and thus it is safe to use the harvester.

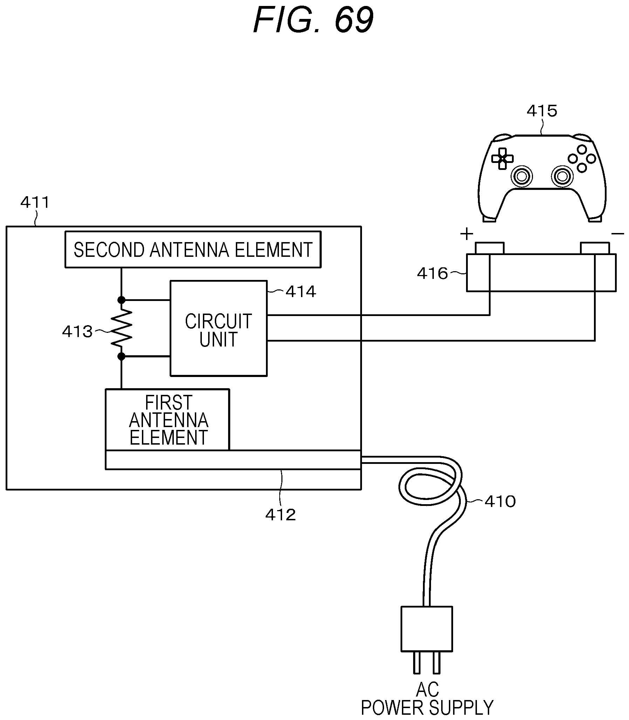

Fig. 69 illustrates an embodiment in which the present technology is applied to a game device connected to an AC power supply by a cable 410 and in a state of floating from GND. The GND of a power supply board 412 of a game device 411 is used as a first antenna element, and a metal case portion, a heat sink, or the like of game device 411 is used as a second antenna element. These antenna elements are connected by a separation resistor 413 (10 kQ or more). Outputs from opposite ends of the separation resistor 413 are input to a circuit unit 414. The circuit unit 414 is provided with the rectifier circuit 2, the charger 3, and the energy storage device 4, which are illustrated in Fig. 1, and the stored power is supplied from the rectifier circuit 2, the charger 3, and the energy storage device 4 to a charging base 416 of a game controller 415 via a cable. Furthermore, the energy storage device 4 may be omitted depending on the intended use. In the above-described embodiment, the cable leads out from the circuit unit 414 to the charging base 416, but may be supplied to the connector on the side surface of the game device body for charging.

The harvested power is supplied to the charging base 416 of the game controller 415. When the game controller 415 is placed on the charging base 416, the game controller 415 is charged through a mechanical contact, a non-contact, or the like. Note that the filter 402 may be used instead of the separation resistor 413. Furthermore, it is also possible to integrally form the charging base 416 with the main body of the game device 411. Moreover, in a case where the shield portion of the connector is connected to GND, the performance of a local area network (LAN) cable or a high-definition multimedia interface (HDMI) (registered trademark) cable deteriorates. Therefore, it is necessary to prevent the shield portion of the connector from being connected to the GND such as the power supply board.

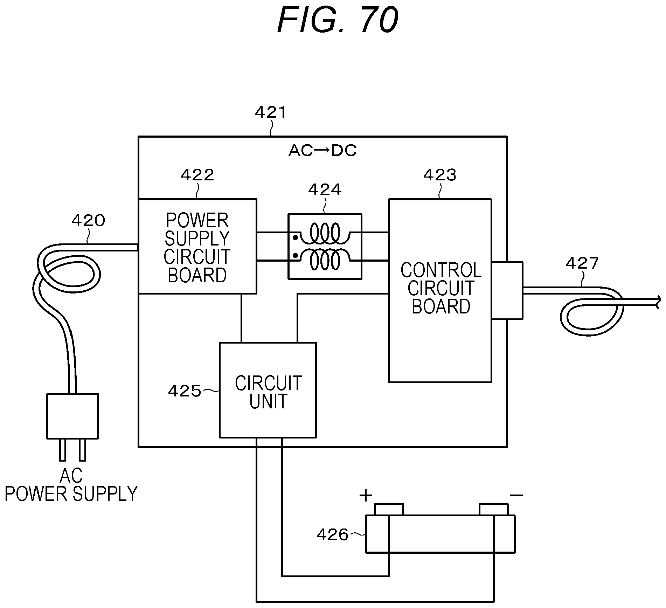

Fig. 70 illustrates another example in which the present technology is applied to a game device. A game device 421 is connected to an AC power supply through a cable 420. A power supply circuit board 422 on which a converter or the like for generating DC power from AC power is mounted and a control circuit board 423 on which a control unit is mounted are provided inside the game device 421. The GND of the power supply circuit board 422 is used as a first antenna element, and the GND of the control circuit board 423 is used as a second antenna element.

A common mode choke filter 424 is inserted between the GND of the power supply circuit board 422 and the GND of the control circuit board 423. The GND of each board and a circuit unit 425 are connected. The circuit unit 425 is provided with the rectifier circuit 2, the charger 3, and the energy storage device 4, which are illustrated in Fig. 1, and the stored power is supplied from the rectifier circuit 2, the charger 3, and the energy storage device 4 to a charging base 426 of a game controller via a cable. Furthermore, the energy storage device 4 may be omitted depending on the intended use. In the above-described embodiment, the cable leads out from the circuit unit 425 to the charging base 426, but may be supplied to the connector on the side surface of the game device body for charging.

Since the power supply circuit board 422 which generates noise and the control circuit board 423 are separated from each other, the antenna length looks long in a case where a cable 427 (cable such as a LAN cable or a HDMI (registered trademark) cable) having GND is connected to the control circuit board 423. Therefore, it is possible to obtain large power. Since the direct current is output from the power supply circuit board 422 to the control circuit board 423, the direct current is separated by a filter, for example, the common mode choke filter 424. Furthermore, in a case where it is difficult to add a separation resistor or a filter, it is possible to cope with the case by providing a metal portion on the back surface of the power supply circuit board 422 to be the first antenna element so as to be capacitively coupled to a noise generation source. Furthermore, a heat sink (insulated from the power supply circuit board 422) for heat dissipation provided on the power supply circuit board 422 can also be used as the first antenna element.

The present technology can be applied not only to the game device but also a television receiver, a hard disk recorder, and an audio device. Furthermore, the present technology can be applied not only to a charging power supply of the game controller but also a charging power supply of an internal battery of the device and a power supply (for example, a device used in a smart factory or a smart city) for measuring the internal temperature of the device.

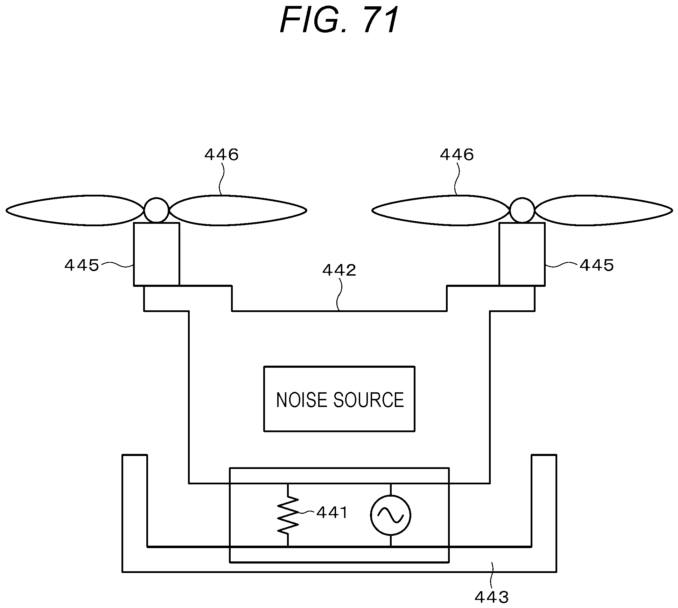

Fig. 71 illustrates an example in which the present technology is applied to a drone. The drone flies by rotating a propeller with a motor. In the power supply circuit of the drone, an inverter circuit is mounted for controlling the motor, and noise of various frequencies are generated. By separating the upper mechanism and the lower mechanism of the drone including a noise source and the power supply circuit by using the separation resistor and connecting the circuit unit to the upper mechanism and lower mechanism, it is possible to extract large power as in the case of the game device described above. Moreover, the power can be used as a power supply for driving a sensor such as a temperature sensor or a humidity sensor.

Next, an embodiment in which the present technology is applied to the drone will be described. Fig. 71 is an example of the drone, and illustrates a metal main body 442 and a lower metal frame 443.

The main body 442 houses a control unit, a battery unit as a power source, and the like in the metal case. The power generator of Fig. 1 is provided in the main body 442. A plurality of support shafts extending substantially horizontally from the main body 442 is provided, and a motor 445 as a drive source of a rotor blade 446 is attached to a distal end surface of each of the support shafts. The rotor blade 446 is attached to a rotation shaft of the motor 445. A motor control circuit for controlling each motor is provided in the main body 442. The drone is remotely controlled by a controller on the ground.

The drone is divided into an upper configuration and a lower configuration by inserting a separation resistor Ry of 10 kQ or more between the upper configuration including the main body 442, the motor 445, and the rotor blade 446 and the lower configuration including the metal frame 443. The upper configuration is a first antenna element having a noise source, and the lower configuration is a second antenna element (without grounding). The rectifier circuit of the power generator in Fig. 1 and the circuit unit such as a detection unit are housed in the main body 242.

Moreover, the present technology can be applied not only to the drone but also to a vehicle, a bus, and the like. The vehicle is grounded via the ground resistance of a tire (for example, about 10 MΩ) in order to release static electricity. In the present technology, when the ground resistance is at least 10 kQ or more, it is in a floating state. Therefore, in a case where the present technology is applied to an automobile, the first antenna element is a chassis in which an engine and a power supply of the vehicle are mainly placed. In this case, a vehicle door or a hood can be set as the second antenna element by using the separation resistor. By connecting the circuit unit to this portion, it is possible to extract large power.

The harvester according to the present technology can be used as a charging power source of the battery. For example, in a case where a battery having a charge voltage of about 2.5 V is charged by the power induced in the harvester, a voltage equal to or higher than the upper limit voltage (for example, 2.7 V) cannot be applied to the battery. That is, it is necessary to take measures to prevent a voltage of 2.5 V or higher from being applied to the battery by using a Zener diode that functions at a power of 2.5 V induced in the harvester. However, in this case, since the set voltage of the Zener diode is low, the protection current starts to flow at about 1 V. Therefore, it is difficult to efficiently charge the battery.

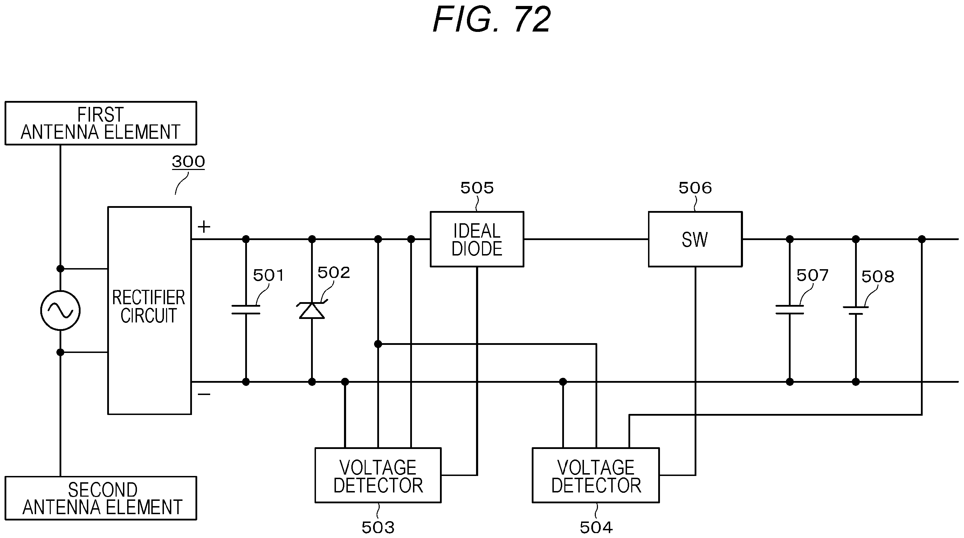

Fig. 72 illustrates an example of a charge circuit that can solve such a problem. The harvester 300 includes a first antenna element, a second antenna element, and a rectifier circuit. The first antenna element is a metal portion of a refrigerator, a vehicle, or the like and the second antenna element is a pattern of the board, the metal frame, GND, or the like. A positive DC voltage is extracted at one output terminal of the harvester 300, and the other output terminal is set to negative (GND). The rectifier circuit of the harvester 300 is a full-wave rectifier circuit including a diode having a withstand voltage of 50 V. A capacitor 501 having a withstand voltage of 50 V and a Zener diode 502 for protecting a voltage detector 503 are connected between the output terminals of the harvester 300.

The voltage detector 503 detects that the output voltage of the harvester 300 is 2.4 V. The other voltage detector 504 detects that the voltage of a battery 508 is 2.7 V. An ideal diode 505 is controlled using the detection output of the voltage detector 503. A switching circuit 506 for preventing overcharge is connected in series with the ideal diode 505. The switching circuit 506 includes, for example, an FET, and is controlled using the detection output of the voltage detector 504.

The ideal diode 505 is turned on when 2.4 V is detected, and the switching circuit 506 is turned off when 2.7 V is detected. A capacitor 507 having a withstand voltage of 10 V is connected to the output side of the switching circuit 506, and the battery 508 is connected in parallel with the capacitor 507. In such a charge circuit, when the battery voltage reaches 2.4 V, the switching circuit 506 is turned on, and when the battery voltage reaches 2.7 V, the switching circuit 506 is turned off, and the charge accumulated in the capacitor 501 can be transferred to the battery 508 in the subsequent stage. Furthermore, by providing the capacitor 507 having a withstand voltage of 10 V in front of the battery 508, in a case where the switching circuit 506 for preventing overcharge is turned off after the battery voltage is fully charged, it is possible to prevent 6.5 V, which is the voltage of the Zener diode 502 in the preceding stage, from being directly applied to the battery at the time of reconnection. Such a charge circuit enables efficient charging in a case where a voltage of 40 V is induced in the harvester 300 in the preceding stage.

Although the embodiments of the present technology have been specifically described above, the present technology is not limited to the above-described embodiments, and various modifications based on the technical idea of the present technology can be made. Furthermore, one or a plurality of arbitrarily selected aspects can be appropriately combined. Furthermore, the configurations, methods, steps, shapes, materials, numerical values, and the like of the above-described embodiments can be combined with each other without departing from the gist of the present technology. For example, power generation using the present technology and natural energy, for example, solar power generation or a thermoelectric conversion element may be used in combination to store energy.

### REFERENCE SIGNS LIST

1, 100, 101, 102, 103 Antenna device
2, 2A, 2B, 2C Rectifier circuit
11, 11A, 11B Antenna element
12 Device board
15 Feeding point
20A, 20B, 20C Antenna element
80 Load

## Claims

1. A rectifier circuit comprising:
a first line including a first series circuit in which two or more switching elements are connected in series;
a second line including a second series circuit in which three or more switching elements are connected in series, the second series circuit being connected in parallel with the first series circuit;
one or more first antenna elements connected between the switching elements of the first series circuit; and
one or more second antenna elements connected between the switching elements of the second series circuit,
wherein an output is extracted from a parallel connection point between the first series circuit and the second series circuit.

2. The rectifier circuit according to claim 1, wherein each of the switching elements is a diode or an FET.

3. The rectifier circuit according to claim 1, wherein the first line includes a first diode series circuit in which two or more diodes are connected in series with a same polarity,
the second line includes a second diode series circuit in which three or more diodes are connected in series with the same polarity as that of the first diode series circuit, the second diode series circuit being connected in parallel with the first diode series circuit,
one or more first antenna elements are connected between the diodes of the first diode series circuit,
one or more second antenna elements are connected between the diodes of the second diode series circuit, and
an output is extracted from a parallel connection point between the first diode series circuit and the second diode series circuit.

4. The rectifier circuit according to claim 3, wherein a DC-cut element is connected between at least one diode connection point of the first diode series circuit and the first input terminal.

5. The rectifier circuit according to claim 3, wherein the first diode series circuit includes a first diode and a second diode,
the first input terminal is connected to a connection point between an anode of the first diode and a cathode of the second diode,
the second diode series circuit includes a third diode, a fourth diode, and a fifth diode, and one second input terminal is connected to a connection point between an anode of the third diode and a cathode of the fourth diode, and
the other second input terminal is connected to a connection point between an anode of the fourth diode and a cathode of the fifth diode.

6. A power generator comprising:
one or a plurality of first antenna elements;
a plurality of second antenna elements which is conductive and different from the first antenna elements;
a plurality of antenna units respectively including the one or a plurality of first antenna elements and the plurality of second antenna elements; and
a rectifier circuit configured to rectify output signals of the plurality of antenna units,
wherein the rectifier circuit includes
a first line including a first series circuit in which two or more switching elements are connected in series,
a second line including a second series circuit in which three or more switching elements are connected in series, the second series circuit being connected in parallel with the first series circuit,
one or more first antenna elements connected between the switching elements of the first series circuit, and
one or more second antenna elements connected between the switching elements of the second series circuit, and
an output is extracted from a parallel connection point between the first series circuit and the second series circuit.

7. The power generator according to claim 6, wherein each of the switching elements is a diode or an FET.

8. The power generator according to claim 6, wherein the first line includes a first diode series circuit in which two or more diodes are connected in series with a same polarity,
the second line includes a second diode series circuit in which three or more diodes are connected in series with the same polarity as that of the first diode series circuit, the second diode series circuit being connected in parallel with the first diode series circuit,
one or more first antenna elements are connected between the diodes of the first diode series circuit,
one or more second antenna elements are connected between the diodes of the second diode series circuit, and
an output is extracted from a parallel connection point between the first diode series circuit and the second diode series circuit.

9. The power generator according to claim 8, wherein a DC-cut element is connected between at least one diode connection point of the first diode series circuit and the first input terminal.

10. The power generator according to claim 8, wherein the first diode series circuit includes a first diode and a second diode,
the first input terminal is connected to a connection point between an anode of the first diode and a cathode of the second diode,
the second diode series circuit includes a third diode, a fourth diode, and a fifth diode, and one second input terminal is connected to a connection point between an anode of the third diode and a cathode of the fourth diode, and
the other second input terminal is connected to a connection point between an anode of the fourth diode and a cathode of the fifth diode.

11. The power generator according to claim 6, wherein each of the antenna units receives a radio wave in a space and electric field energy of a quasi-electrostatic field.

12. The power generator according to claim 6, wherein each of the first antenna elements is a conductor that is in contact with an industrial product metal portion or a human body that is not grounded to a ground that is an earth, and each of the second antenna elements is a conductor different from the first antenna element and is provided so as not to be in contact with the industrial product metal portion or the human body.
